# EUROPÄISCHE PATENTSCHRIFT

(11) **EP 4 082 409 B1**
(45) Veröffentlichungstag und Bekanntmachung des Hinweises auf die Patenterteilung: **11.09.2024**
(21) Anmeldenummer: 22168712.2
(22) Anmeldetag: 19.04.2022
(51) Int. Cl.: A47J 37/07, A47J 37/06

(54) **PORTABLE ELEKTROGRILLVORRICHTUNG**
PORTABLE ELECTRIC GRILLING DEVICE
DISPOSITIF FORMANT GRIL ÉLECTRIQUE PORTATIF

(30) Priorität: 28.04.2021 DE 102021110952
(43) Veröffentlichungstag der Anmeldung: 02.11.2022
(73) Patentinhaber: Severin Elektrogeräte GmbH, 59846 Sundern (DE)
(72) Erfinder: Rennies, Felix, 10585 Berlin (DE); Hänschen, Ralf, 10551 Berlin (DE)
(74) Vertreter: Köchling, Conrad-Joachim

(56) Entgegenhaltungen:
- CN-A- 111 631 614
- DE-U1- 202005 001 459
- DE-U1- 202009 001 087
- GB-A- 2 081 889
- US-A1- 2005 205 544
- US-A1- 2011 031 234

## Beschreibung

Die vorliegende Erfindung betrifft eine portable Elektrogrillvorrichtung gemäß dem Oberbegriff des Patentanspruchs 1.

Aus der CN 111 631 614 A ist eine portable Elektrogrillvorrichtung dieser Art bekannt.

Zur Zubereitung von Lebensmitteln ist es bekannt, die Lebensmittel zu garen. Das Garen dient der Behandlung der Lebensmittel mit Wärme, um die Lebensmittel hinsichtlich ihrer Konsistenz, ihres Geschmacks, ihrer Vertraulichkeit und bzw. oder ihrer gesundheitlichen Wirkung zu verändern.

Zu den Gartechniken gehören auch das Braten sowie das Grillen. Beim Braten, welches üblicherweise in einer Pfanne durchgeführt wird, wird dem Lebensmittel als Gargut über den Pfannenboden direkt Hitze zugeführt, welche üblicherweise deutlich über 100 °C liegt. Üblicherweise wird Fett oder Öl zum Braten in der Pfanne verwendet, um ein Anhaften des Garguts an der Innenseite der Pfanne zu vermeiden. Insbesondere Fleisch wird als Gargut in Pfannen gebraten. Das Braten, insbesondere von Fleisch, kann aber auch in einem Backofen erfolgen, wobei üblicherweise das Fleisch in der Pfanne zunächst bei hoher Temperatur scharf angebraten und dann im Backofen bei niedriger Temperatur fertig gebraten wird.

Beim Grillen erfolgt das Garen nicht durch direkten Kontakt mit einer heißen Fläche wie beim Braten in der Pfanne bzw. durch heiße Luft oder Wärmestrahlung im Garraum eines Ofens sondern durch Wärmestrahlung einer Hitzequelle, welche von unten durch die Zwischenräume eines Grillrosts, welcher auch als Bratrost bezeichnet werden kann, auf das Lebensmittel einwirkt. Diese Art des Grillens wird auch als direktes Grillen bezeichnet, da auch ein indirektes Grillen bekannt ist. Beim indirekten Grillen wird das Lebensmittel als Gargut bzw. als Grillgut in einem geschlossenen Grill neben der Hitzequelle angeordnet und somit nur indirekt von der Hitzequelle erreicht.

In jedem Fall ist es beim Grillen weit verbreitet, den Grill bzw. das Grillgerät portabel, d.h. beweglich wie zum Beispiel tragbar und bzw. oder rollbar, auszugestalten, um den Grill im Freien aufstellen und dort flexibel nutzen zu können. Üblich ist insbesondere das Grillen mittels eines derartigen Grillgeräts im Garten, auf der Terrasse, auf dem Balkon und dergleichen.

Beim Grillen im Freien wird üblicherweise zum Grillen als Hitzequelle ein Feuer verwendet, welches üblicherweise durch Holzkohle erzeugt wird. Derartige Grillgeräte werden daher auch als Holzkohlegrille bezeichnet. Es sind jedoch auch zunehmend Grillgeräte verbreitet, welche mittels Flüssiggas ein Feuer als Hitzequelle erzeugen können und daher als Gasgrille bezeichnet werden. Ferner sind Grillgeräte bekannt, welche elektrisch beheizbare Heizschleifen aufweisen, welche unterhalb des Grillrosts und parallel zu diesem verlaufen. Die elektrisch beheizbaren Heizschleifen werden zum Glühen gebracht und geben somit Wärmestrahlung an das Grillgut ab. Derartige Grillgeräte werden als Elektrogrille bezeichnet. Vorteilhaft bei Elektrogrillen ist, dass diese kein zusätzliches Brennmaterial zum Beispiel in Form von Holzkohle oder Flüssiggas erfordern, welches vom Benutzer beschafft und bevorratet werden muss, um den Holzkohlegrill bzw. um den Gasgrill überhaupt betreiben zu können. Auch kann die Verwendung von Holzkohle zu Resten von unverbrannter Holzkohle sowie zu entstandener Asche führen, welche jeweils vom Benutzer zu entfernen und zu entsorgen sind. Vielmehr kann ein Elektrogrill mittels eines elektrischen Kabels über eine Steckdose elektrisch versorgt und betrieben werden. Dies erhöht die Verfügbarkeit der Möglichkeit des Elektrogrillens gegenüber der Verwendung eines Holzkohlegrills sowie eines Gasgrills. Auch wird die Beschaffung sowie Bevorratung von Brennmaterial vermieden. Ferner wird die Reinigung des benutzten Elektrogrills vereinfacht. Des Weiteren ist das Grillen mit einem Elektrogrill in Gebäuden gestattet, bei der Verwendung von Holzkohle oder Gas als Hitzequelle hingegen untersagt.

Dennoch weisen derzeitig bekannte Elektrogrille sowie andere Grillgeräte diverse Nachteile auf.

Nachteilig bei Elektrogrillen ist, dass der Betrieb bzw. die Versorgung über eine häusliche Steckdose üblicherweise bei einer Netzspannung von 230 V erfolgt, dessen Stromstärke üblicherweise auf maximal 16 A begrenzt ist. Damit steht nur eine begrenzte elektrische Leistung zur Verfügung, um den Elektrogrill zu betreiben bzw. welche als Wärmeleistung an das Grillgut abgegeben werden kann. Eine derartige Einschränkung liegt üblicherweise bei Holzkohlegrillen und Gasgrillen nicht vor bzw. ist die Grenze der verfügbaren Wärmeleistung dort deutlich höher anzusetzen, da bei Holzkohlegrillen die Menge der Grillkohle und bei Gasgrillen die Menge des brennenden Gases derart erhöht werden kann, dass eine deutlich höhere Wärmeleistung an das Grillgut abgegeben werden kann als bei einem Elektrogrill. Nachteilig bei Grillgeräten allgemein ist, dass diese üblicherweise einen Großteil ihrer Wärmeleistung nicht an das Grillgut sondern an die umgebende Luft abgeben, sodass diese Wärmeleistung an die Umgebung verloren geht und nicht für den Grillprozess genutzt werden kann. Dieser Nachteil wird gerade dadurch gefördert, dass das Grillen üblicherweise bei einer möglichst hohen Betriebstemperatur erfolgen soll, um am Grillgut eine ausreichende Wärmestrahlung zu erreichen, welche für einen Grillprozess erforderlich ist. Dies führt zu einer entsprechend starken Konvektionsströmung, welche entsprechend viel Wärmeleistung ungenutzt an die Umgebung abführt. Nachteilig bei Grillgeräten allgemein ist ferner, dass stets nur ein Teil der erzeugten Wärmestrahlung das Grillgut erreicht und die übrige Wärmestrahlung ungenutzt bleibt bzw. sogar unerwünschter Weise das Gehäuse bzw. das Gestell des Grillgeräts stark erwärmt, was für den Benutzer sowie weitere Personen im Falle einer Berührung des Gehäuses bzw. des Gestells des Grillgeräts zu Verbrennungen führen kann.

Bei Grillgeräten ist es auch bekannt, in einem geschlossenen Garraum des Grills Holzstücken, auch Holzchips genannt, bzw. Holzspäne zum Schwelen zu bringen und hierdurch während des Grillens zu verräuchern, d.h. Rauch im Garraum zu erzeugen. Hierdurch kann während des Grillens gleichzeitig eine gewisse Räucherung des Grillguts erzeugt und hierdurch dem Grillgut eine gewisse Rauchnote beigefügt werden. Derartige Grillgeräte werden auch als Smoker bzw. die Möglichkeit zum Verräuchern von Holzchips wird auch als Smoker-Funktion eines Grillgeräts bezeichnet.

Nachteilig bei Grillgeräten mit Smoker-Funktion allgemein ist, dass die Holzchips üblicherweise mit der gleichen Temperatur verbrannt werden, mit welcher das Grillgut gegrillt wird. Da zum Grillen des Grillguts üblicherweise eine hohe Temperatur verwendet wird, erfolgt das Verbrennen der Holzchips üblicherweise mit einer zu hohen Temperatur, um ein Schwelen zu erreichen, sodass die Holzchips eher verbrennen und somit nur kurzzeitig eine vergleichsweise geringe Menge an Rauch erzeugt wird. Das gewünschte langanhaltende Schwelen der Holzchips wird dann nicht erreicht.

Eine Aufgabe der vorliegenden Erfindung ist es, eine portable Elektrogrillvorrichtung der eingangs beschriebenen Art bereit zu stellen, sodass die eingangs beschriebenen Nachteile zumindest teilweise überwunden werden können. Insbesondere soll die elektrische Zubereitung von Lebensmitteln, insbesondere das elektrische Braten und bzw. oder das elektrische Grillen von Lebensmitteln, verbessert werden, insbesondere hinsichtlich der Energieeffizienz, der Vielfältigkeit der Garprozesse und bzw. oder der Reinigung der Zubereitungsvorrichtung. Insbesondere soll bei der elektrischen Zubereitung von Lebensmitteln eine Smoker-Funktion bereitgestellt werden, welche ein langanhaltendes Schwelen der Holzchips ermöglicht. Zusätzlich oder alternativ soll insbesondere bei der elektrischen Zubereitung von Lebensmitteln die maximal erreichbare Temperatur des Garprozesses erhöht werden können. Zusätzlich oder alternativ soll bei der elektrischen Zubereitung von Lebensmitteln die thermische Isolation gegenüber dem Gehäuse bzw. gegenüber dem Gestell der Zubereitungsvorrichtung verbessert werden, um die Verbrennungsgefahr für Personen zu reduzieren bzw. zu vermeiden. Dies soll insbesondere für geschlossen betreibbare Elektrogrillvorrichtungen ermöglicht werden. Insbesondere soll dies jeweils möglichst einfach, kompakt und bzw. oder kostengünstig umgesetzt werden können. Zumindest soll eine Alternative zu bekannten derartigen Elektrogrillvorrichtungen geschaffen werden.

Die Aufgabe wird erfindungsgemäß durch eine portable Elektrogrillvorrichtung mit den Merkmalen des Patentanspruchs 1 gelöst. Vorteilhafte Weiterbildungen sind in den Unteransprüchen beschrieben.

Die portable Elektrogrillvorrichtung ist mobil, d.h. ortsveränderlich, ausgebildet und kann, insbesondere von einer einzigen Person, durch Tragen und bzw. oder durch Rollen bewegt werden. Die Grillfläche wird durch einen Grillrost gebildet, welcher in der vertikalen Richtung von unten, vorzugsweise über eine elektrisch beheizbare Heizschleife, elektrisch beheizt werden kann.

Gemäß einem weiteren Aspekt der Erfindung weist die Elektrogrillvorrichtung wenigstens ein Paar von, vorzugsweise entnehmbaren, Ableitelementen auf, welche parallel zueinander und einander schräg zur vertikalen Richtung zugewandt unterhalb der ersten Bratfläche und der Grillfläche angeordnet sind.

Hierdurch kann unterhalb der Grillfläche ein Trichter geschaffen werden, welcher die Stoffe dem Auffangbehälter zuführen und gleichzeitig den Auffangbehälter in der vertikalen Richtung zum Heizelement der Grillfläche beabstanden kann. Dies kann die Wirksamkeit der Zufuhr der Stoffe zum Auffangbehälter erhöhen sowie die Fläche des Auffangbehälters geringhalten, wie bereits zuvor beschrieben.

Gemäß einem weiteren Aspekt der Erfindung weist die Elektrogrilleinheit einen Smoker auf, welcher ausgebildet ist, elektrisch erhitzt zu werden und rauchbildendes Material zu verräuchern, wobei der Smoker ausgebildet ist, mit einer elektrischen Leistung betrieben zu werden, welche geringer und unabhängig von der elektrischen Leistung der ersten Bratfläche und der Grillfläche, vorzugsweise ferner einer zweiten Bratfläche, ist. Auf diese Art und Weise kann das Schwelen bzw. das Verräuchern von Holzchips separat und unabhängig von dem Betrieb und damit von der Temperatur der Grillfläche bzw. der Bratfläche erfolgen, sodass die Temperatur des Smokers, vorzugsweise durch die Auslegung des entsprechenden separaten Heizelements, genau auf das Schwelen bzw. auf das Verräuchern von Holzchips ausgelegt werden kann. Hierdurch kann eine möglichst gleichmäßige und langanhaltende Verräucherung der Holzchips erfolgen, was die gewünschte Wirkung auf das Gargut entsprechend verbessern kann.

Gemäß einem weiteren Aspekt der Erfindung wird die erste Bratfläche, vorzugsweise ferner eine zweite Bratfläche, von einer in der Horizontalen geschlossenen Bratplatte gebildet, wobei ein erstes Heizelement der ersten Bratfläche, vorzugsweise ferner ein zweites Heizelement der zweiten Bratfläche, in der vertikalen Richtung abgewandt an der Bratplatte berührend anliegend angeordnet und ausgebildet ist, die Bratplatte wenigstens im Bereich der ersten Bratfläche, vorzugsweise und im Bereich der zweiten Bratfläche, zu erhitzen. Dies kann die Umsetzung der entsprechenden zuvor beschriebenen Eigenschaften und Vorteile begünstigen. Insbesondere kann die Wärmeübertragung des ersten Heizelements auf die erste Bratfläche hierdurch möglichst wirkungsvoll erfolgen, was die Energieeffizienz verbessern kann. Gemäß einem weiteren Aspekt der Erfindung weist die Elektrogrilleinheit wenigstens eine Abdeckplatte auf, welche der Bratplatte in der vertikalen Richtung abgewandt unterhalb des ersten Heizelements, vorzugsweise und des zweiten Heizelements, vorzugsweise berührend anliegend, angeordnet und ausgebildet ist, Strahlungswärme des ersten Heizelements, vorzugsweise und des zweiten Heizelements, zur Bratplatte hin zu reflektieren. Hierdurch kann eine Abschirmung des Heizelements derart von unten erfolgen, dass möglichst viel der abgegebenen Wärme der Bratfläche zugeführt werden kann. Dies kann die Energieeffizienz verbessern. Gemäß einem weiteren Aspekt der Erfindung weist die Elektrogrilleinheit wenigstens einen Isolationsraum auf, welcher dem ersten Heizelement, vorzugsweise und dem zweiten Heizelement, in der vertikalen Richtung abgewandt unterhalb der Abdeckplatte angeordnet und, vorzugsweise durch eine Füllung mit Isolationsmaterial, ausgebildet ist, die Abdeckplatte wenigstens in der vertikalen Richtung thermisch zu isolieren. Hierdurch kann zum einen die Energieeffizienz weiter gesteigert werden, indem die vom Heizelement erzeugte Wärme möglichst in dessen Umgebung gehalten und so möglichst der Bratfläche zugeführt werden kann. Zum anderen kann eine thermische Isolation gegenüber der Umgebung, zumindest in der vertikalen Richtung nach unten, erfolgen, wodurch der Benutzer vor Verletzung sowie Gegenstände in der Umgebung und insbesondere unterhalb der Elektrogrilleinheit vor Beschädigung durch übermäßige Erwärmung bewahrt werden können. Gemäß einem weiteren Aspekt der Erfindung weist die Elektrogrilleinheit wenigstens ein Isolationsblech auf, welches dem ersten Heizelement, vorzugsweise und dem zweiten Heizelement, in der vertikalen Richtung abgewandt den Isolationsraum begrenzt, wobei das Isolationsblech mit wenigstens einem Gehäuseteil der Elektrogrilleinheit verbunden ist, wobei das Isolationsblech im Bereich der Verbindung mit dem Gehäuseteil der Elektrogrilleinheit mittels einer Lasche in der vertikalen Richtung beabstandet ist und bzw. oder eine Vielzahl von Durchgangsöffnungen aufweist. Hierdurch kann zum einen eine feststehende Montage des Heizelements gegenüber einem weiteren Bauteil der Elektrogrilleinheit wie zum Beispiel einem Gehäuse der Elektrogrilleinheit erfolgen. Die Beabstandung mittels einer Lasche in der vertikalen Richtung kann dabei zum anderen zu einer gewissen thermischen Isolation führen, welche alternativ oder zusätzlich durch die Schaffung von Durchgangsöffnungen, welche eine Wärmeleitung vermeiden und bzw. oder den Durchgang eines kühlenden Luftstroms ermöglichen können, erreicht bzw. verbessert werden kann.

Gemäß einem weiteren Aspekt der Erfindung weist die Elektrogrilleinheit wenigstens ein bewegliches Abdeckelement auf, welches ausgebildet ist, zwischen einer geschlossenen und einer geöffneten Stellung, vorzugsweise durch Klappen, bewegt zu werden und in der vertikalen Richtung oberhalb der Grillfläche und der ersten Bratfläche einen geschlossenen Grillraum zu bilden. Hierdurch kann bei Bedarf vom Benutzer ein geschlossener Grillraum geschaffen werden, in welchem der Garprozess bei gleicher elektrischer Leistung mit höherer Temperatur bzw. bei geringerer elektrischer Leistung mit gleicher Temperatur als im geöffneten Zustand stattfinden kann. Dies kann entsprechend die Temperatur des Garprozesses bzw. die elektrische Energieeffizienz beim Garen erhöhen. Das Abdeckelement kann hierzu gegenüber zum Beispiel einem Gehäuse der Elektrogrilleinheit zwischen den beiden Stellungen beweglich und insbesondere drehbeweglich sein.

Gemäß einem weiteren Aspekt der Erfindung ist das bewegliche Abdeckelement doppelwandig ausgebildet, wobei das bewegliche Abdeckelement vorzugsweise wenigstens eine Lufteinlassöffnung und wenigstens eine Luftauslassöffnung aufweist, welche ausgebildet sind, einen Luftstrom durch den doppelwandigen Bereich des beweglichen Abdeckelements hindurch zu erzeugen. Hierdurch kann auf einfache Art und Weise und insbesondere besonders wirkungsvoll und bzw. oder bauraumsparend eine thermische Isolation des Abdeckelements erreicht werden, wodurch insbesondere der Benutzer sowie weitere Personen in der Umgebung vor Verbrennungen am Abdeckelement geschützt werden können. Hierzu den Schornsteineffekt zu nutzen und einen entsprechenden Luftstrom durch den doppelwandigen Bereich des Abdeckelements hindurch zu erzeugen kann eine aktive Kühlung mittels Luftstrom bewirken, ohne hierfür ein zusätzliches elektrisches Gebläse oder dergleichen verwenden zu müssen. Entsprechend kann die Lufteinlassöffnung des doppelwandigen Bereichs des Abdeckelements in der geschlossenen Stellung in der vertikalen Richtung tieferliegend angeordnet sein als die korrespondierende Luftauslassöffnung.

Gemäß einem weiteren Aspekt der Erfindung ist ein dem Benutzer in der Längsrichtung abgewandtes rückseitiges Gehäuseteil der Elektrogrilleinheit mittels einer parallelen Rückwand der Elektrogrilleinheit doppelwandig ausgebildet, wobei das rückseitige Gehäuseteil und bzw. oder die Rückwand vorzugsweise wenigstens eine Lufteinlassöffnung, vorzugsweise als Durchgangsöffnungen einer Lasche eines Isolationsblech, und wenigstens eine Luftauslassöffnung aufweist, welche ausgebildet sind, einen Luftstrom durch den doppelwandigen Bereich der rückseitigen Gehäuseteil und der Rückwand der Elektrogrilleinheit hindurch zu erzeugen. Hierdurch kann die zuvor beschriebene thermische Isolation des Abdeckelements vergleichbar auf den rückseitigen Bereich der Elektrogrilleinheit übertragen werden, um die zuvor beschriebenen Eigenschaften und Vorteile auch dort nutzen zu können.

Gemäß einem weiteren Aspekt der Erfindung weist die portable Elektrogrillvorrichtung wenigstens eine Schubladeneinheit auf, welche, vorzugsweise direkt, in der vertikalen Richtung unterhalb der Elektrogrilleinheit angeordnet ist. Hierdurch kann ein verschließbarer und einfach zugänglicher Stauraum der portablen Elektrogrillvorrichtung geschaffen werden.

Gemäß einem weiteren Aspekt der Erfindung weist die portable Elektrogrillvorrichtung wenigstens eine bewegliche Seitentischeinheit auf, welche, vorzugsweise in der Querrichtung seitlich, neben der Elektrogrilleinheit angeordnet ist. Hierdurch kann eine Ablagefläche der portablen Elektrogrillvorrichtung geschaffen werden, welche bei Bedarf zur Nutzung in die Horizontale bewegt und insbesondere geklappt sowie bei Nichtbenutzung platzsparend in die Vertikale bewegt bzw. geklappt werden kann.

Gemäß einem weiteren Aspekt der Erfindung weist die portable Elektrogrillvorrichtung wenigstens eine steckbare Schneidebretteinheit auf, welche, vorzugsweise in der Querrichtung seitlich, neben der Elektrogrilleinheit angeordnet ist. Hierdurch kann eine stabile und belastbare Fläche der portablen Elektrogrillvorrichtung geschaffen werden, welche zur Unterstützung des Garprozesses zum Beispiel zum Schneiden von Gargut und anderen Zutaten verwendet werden kann. Die Schneidebretteinheit dabei nicht beweglich sondern steckbar auszubilden kann die Belastbarkeit bzw. die Haltbarkeit erhöhen.

Gemäß einem weiteren Aspekt der Erfindung weist die portable Elektrogrillvorrichtung wenigstens eine Kochfeldeinheit auf, welche, vorzugsweise in der Querrichtung seitlich, neben der Elektrogrilleinheit angeordnet ist. Hierdurch können die Möglichkeiten zur Nutzung der portablen Elektrogrillvorrichtung um die Möglichkeiten eines Kochfeldes erweitert werden. Gemäß einem weiteren Aspekt der Erfindung weist die portable Elektrogrillvorrichtung wenigstens eine Arbeitsflächeneinheit auf, welche, vorzugsweise in der Querrichtung seitlich, neben der Elektrogrilleinheit angeordnet ist. Hierdurch kann, alternativ oder zusätzlich zu der zuvor beschriebenen beweglichen Seitentischeinheit und bzw. oder steckbaren Schneidebretteinheit, der Fläche zur Zubereitung von Lebensmitteln bzw. zur Unterstützung der Garprozesse seitens der portablen Elektrogrillvorrichtung zur Verfügung gestellt werden.

Gemäß einem weiteren Aspekt der Erfindung weist die portable Elektrogrillvorrichtung eine Gestelleinheit, welche portabel sowie zur Aufnahme wenigstens der einen Elektrogrilleinheit, vorzugsweise ferner zur Aufnahme wenigstens einer Schubladeneinheit, wenigstens einer beweglichen Seitentischeinheit, wenigstens einer steckbaren Schneidebretteinheit, wenigstens einer Kochfeldeinheit und bzw. oder wenigstens einer Arbeitsflächeneinheit ausgebildet ist. Hierdurch kann eine mechanische Verbindung bzw. Tragkonstruktion in Form eines Rahmens oder dergleichen zur Verfügung gestellt werden um wenigstens die zuvor beschriebene Elektrogrilleinheit und gegebenenfalls weitere modulare Einheiten seitens der portablen Elektrogrillvorrichtung aufzunehmen. Die Gestelleinheit kann dabei vorzugsweise derart ausgebildet sein, dass die Einheiten austauschbar und vorzugsweise variabel positionierbar aufgenommen werden können. Die Gestelleinheit kann hierzu, insbesondere in der Querrichtung, längenveränderlich ausgebildet sein oder in verschiedenen Breiten zur Verfügung gestellt werden, um unterschiedliche modulare portable Elektrogrillvorrichtungen umsetzen zu können.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine perspektivische Darstellung von vorne von schräg links oben einer Elektrozubereitungsvorrichtung gemäß eines ersten Ausführungsbeispiels mit geschlossenem Abdeckelement;

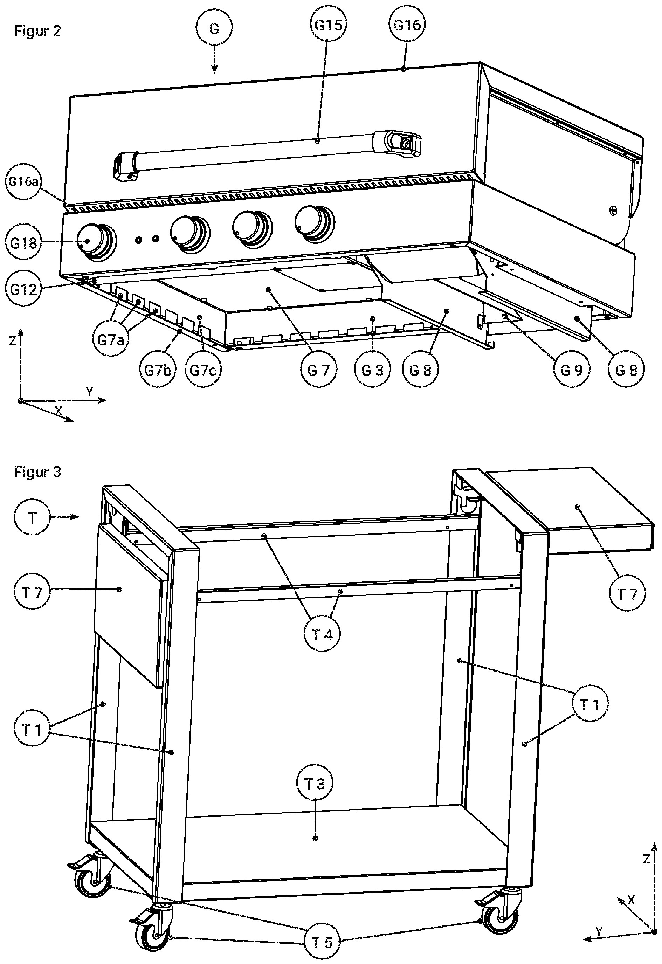

- Figur 2: eine perspektivische Darstellung von vorne von schräg rechts unten einer Zubereitungseinheit der Elektrozubereitungsvorrichtung gemäß des ersten Ausführungsbeispiels mit geschlossenem Abdeckelement;
- Figur 3: eine perspektivische Darstellung von vorne von schräg links oben einer Gestelleinheit der Elektrozubereitungsvorrichtung gemäß des ersten Ausführungsbeispiels;
- Figur 4: die Darstellung der Figur 1 direkt von vorne mit geöffnetem Abdeckelement;
- Figur 5: die Darstellung der Figur 1 direkt von oben mit geöffnetem Abdeckelement;
- Figur 6: einen Querschnitt durch die Darstellung der Figur 1 direkt von vorne mit geschlossenem Abdeckelement;

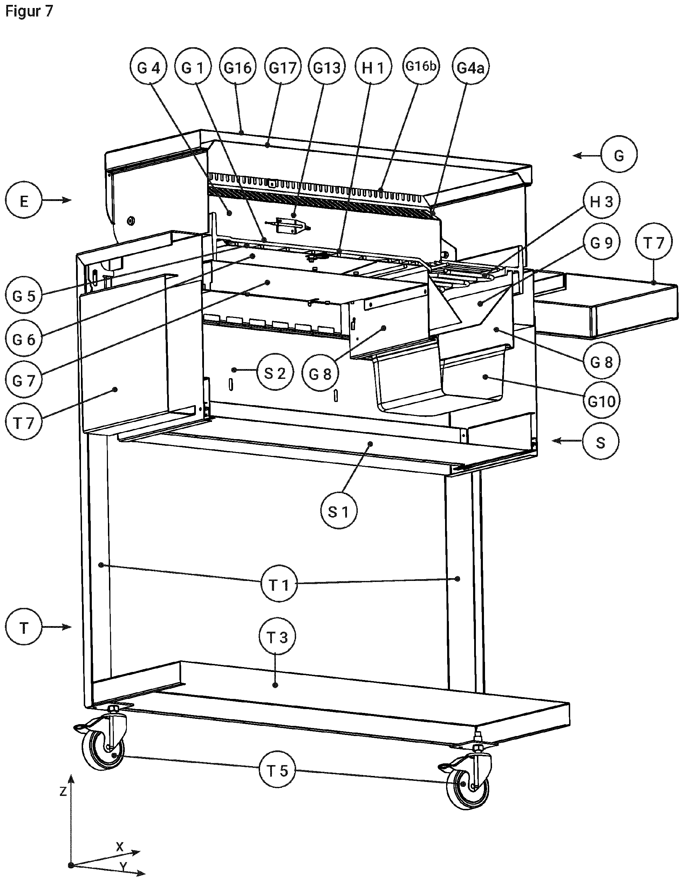

- Figur 7: die Darstellung der Figur 6 perspektivisch von schräg links unten;

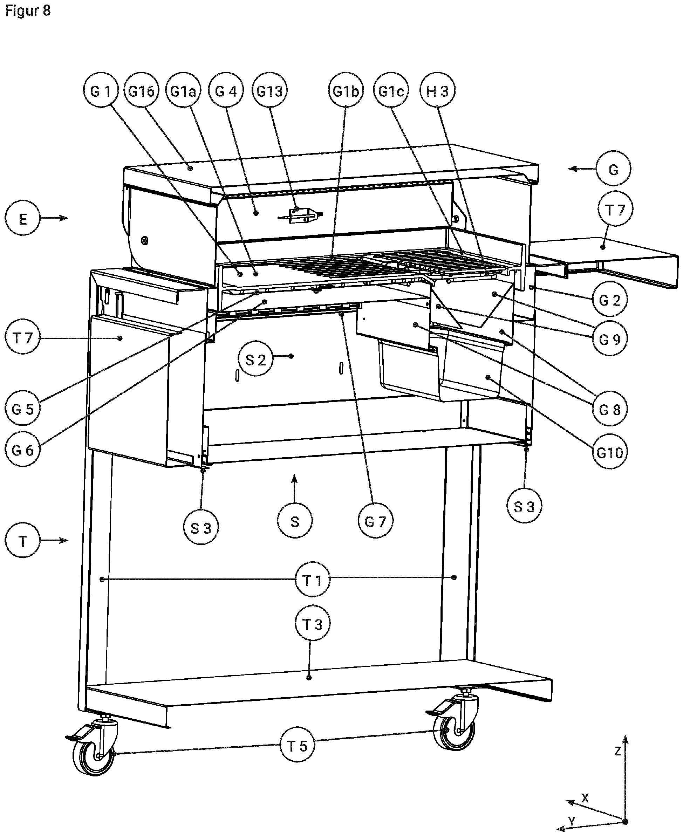

- Figur 8: die Darstellung der Figur 6 perspektivisch von schräg links oben;
- Figur 9: einen Längsschnitt durch die Darstellung der Figur 1 direkt von der linken Seite mit geschlossenem Abdeckelement;

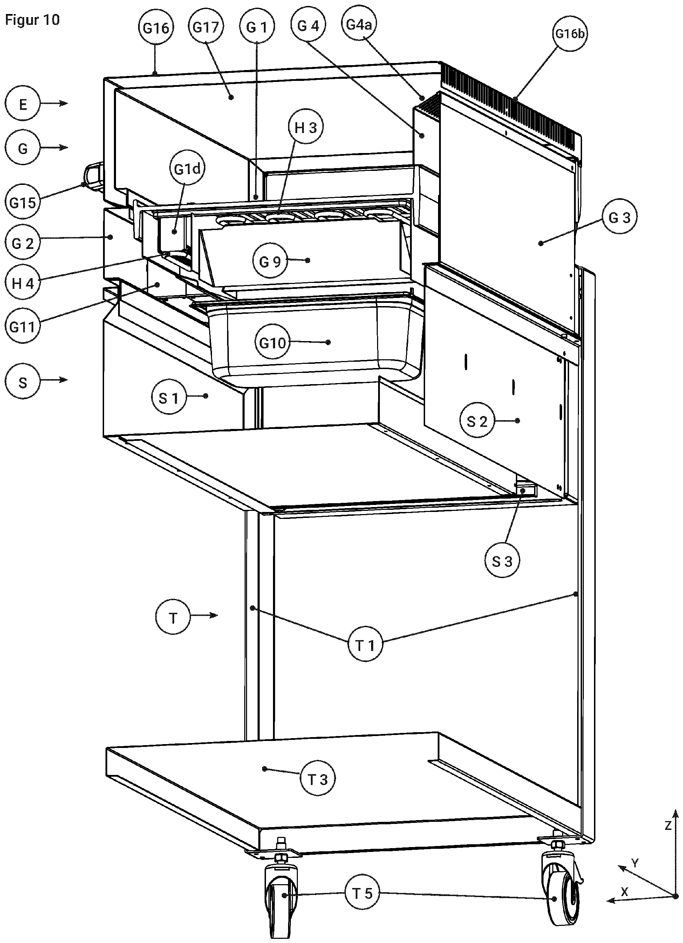

- Figur 10: die Darstellung der Figur 9 perspektivisch von hinten von schräg rechts unten;

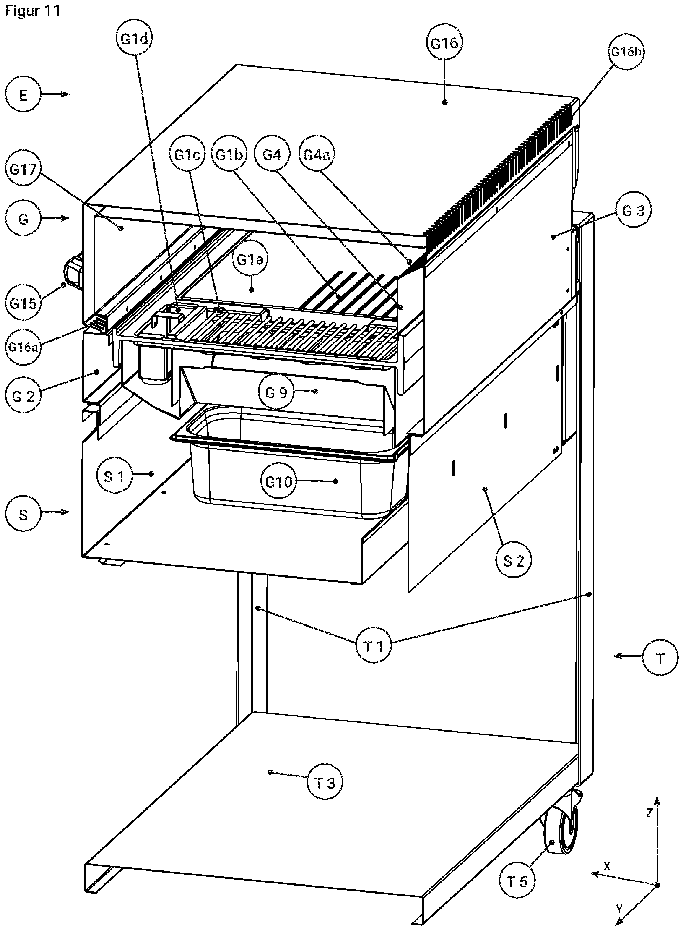

- Figur 11: die Darstellung der Figur 9 perspektivisch von hinten von schräg rechts oben;

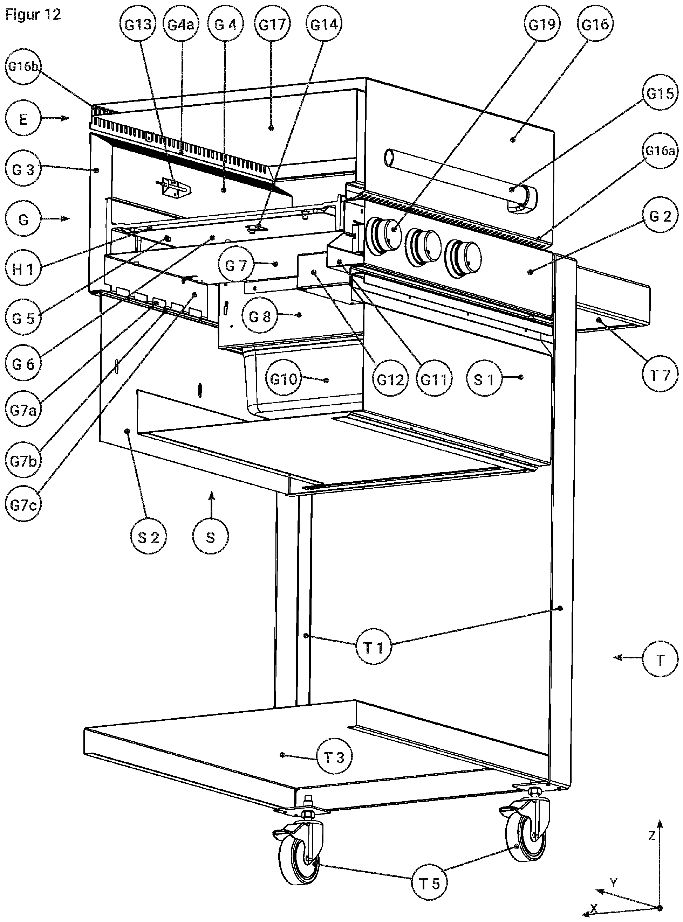

- Figur 12: die Darstellung der Figur 9 perspektivisch von vorne von schräg links unten;

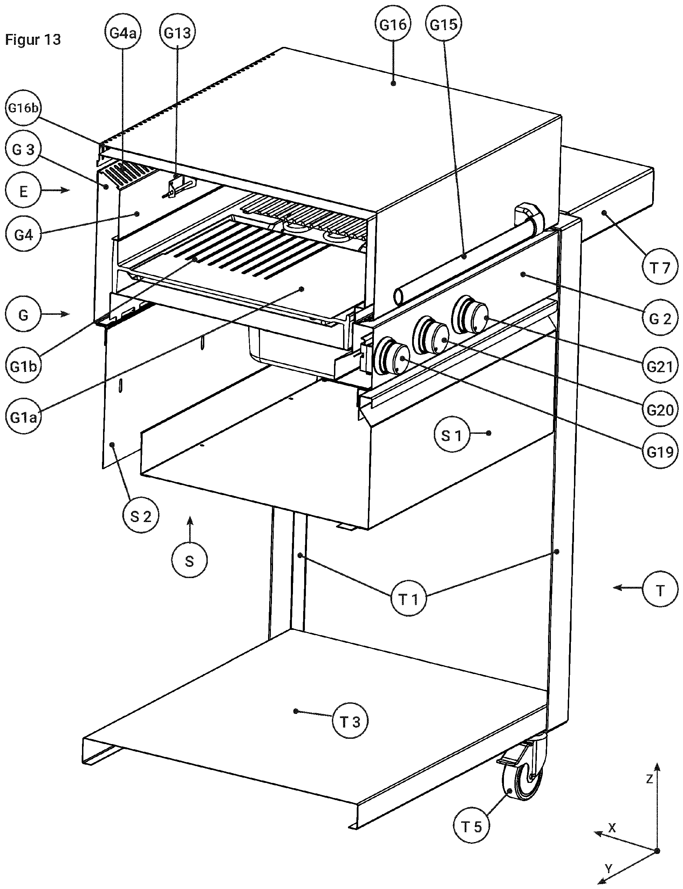

- Figur 13: die Darstellung der Figur 9 perspektivisch von vorne von schräg links oben;
- Figur 14: eine perspektivische Darstellung von vorne von schräg rechts oben einer Heizeinheit der Zubereitungseinheit der Elektrozubereitungsvorrichtung gemäß des ersten Ausführungsbeispiels mit weiteren Elementen;
- Figur 15: die Darstellung der Figur 13 direkt von oben;
- Figur 16: die Darstellung der Figur 13 direkt von vorne ohne weitere Elemente;
- Figur 17: die Darstellung der Figur 13 direkt von rechts ohne weitere Elemente;
- Figur 18: eine teilweise Darstellung der Figur 4 im rechten Bereich mit geschlossenem Abdeckelement und einem Seitentisch in Explosionsdarstellung;
- Figur 19: eine perspektivische Darstellung von vorne von schräg links oben einer Schubladeneinheit der Elektrozubereitungsvorrichtung gemäß des ersten Ausführungsbeispiels;
- Figur 20: eine Darstellung direkt von vorne einer Elektrozubereitungsvorrichtung gemäß eines zweiten Ausführungsbeispiels mit geschlossenem Abdeckelement;
- Figur 21: eine perspektivische Darstellung von vorne von schräg links oben einer Elektrozubereitungsvorrichtung gemäß eines dritten Ausführungsbeispiels mit geschlossenem Abdeckelement;
- und Figur 22: eine perspektivische Darstellung von vorne von schräg links oben einer Gestelleinheit der Elektrozubereitungsvorrichtung gemäß des dritten Ausführungsbeispiels.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

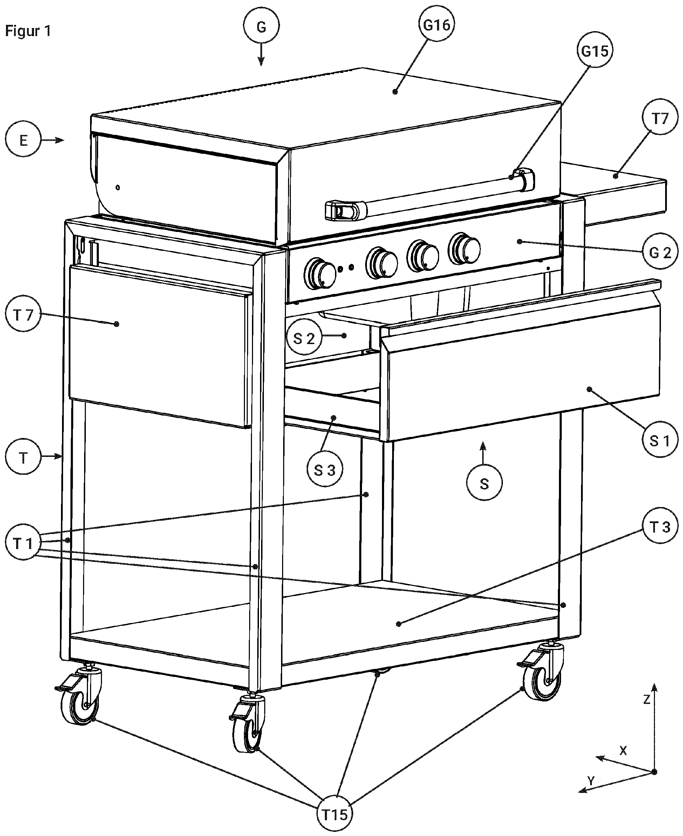

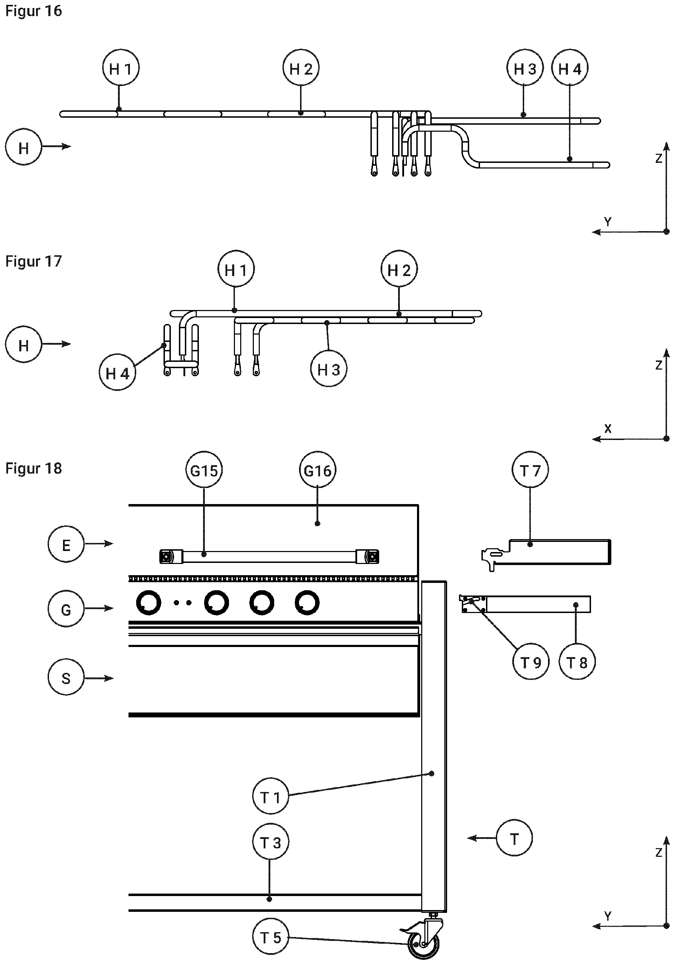

Eine erfindungsgemäße portable Elektrogrillvorrichtung E, welche auch als portable Elektro-BBQ-Vorrichtung E bezeichnet werden kann, weist wenigstens eine Gestelleinheit T, welche auch als Gestellmodul T oder als Ständer T bezeichnet werden kann, und eine Elektrogrilleinheit G, welche auch als Elektrogrillmodul G bezeichnet werden kann, auf. Die Gestelleinheit T bildet dabei einen Rahmen, an welchem unterschiedliche Module wie beispielsweise das Elektrogrillmodul G angeordnet und verwendet werden können. Ein derartiges optionales Modul kann beispielsweise eine Schubladeneinheit S sein, welche auch als Schubladenmodul S bezeichnet werden und in der vertikalen Richtung Z direkt unterhalb des Elektrogrillmoduls G angeordnet werden kann, siehe zum Beispiel Figur 1. In der Querrichtung Y können beidseitig bewegliche bzw. klappbare Seitentischeinheiten T7 als Module angeordnet sein, sodass die Seitentischeinheiten T7 in die Horizontale X, Y hochgeklappt und genutzt sowie in die Vertikale X, Z heruntergeklappt und platzsparend verstaut werden können, siehe zum Beispiel Figur 1. Alternativ kann auch eine streckbare Schneidebretteinheit T8 als Modul alternativ zu einer klappbaren Seitentischeinheiten T7 dort verwendet und mittels einer schrägen Aussparung T9 entfernbar gehalten werden, siehe Figur 18.

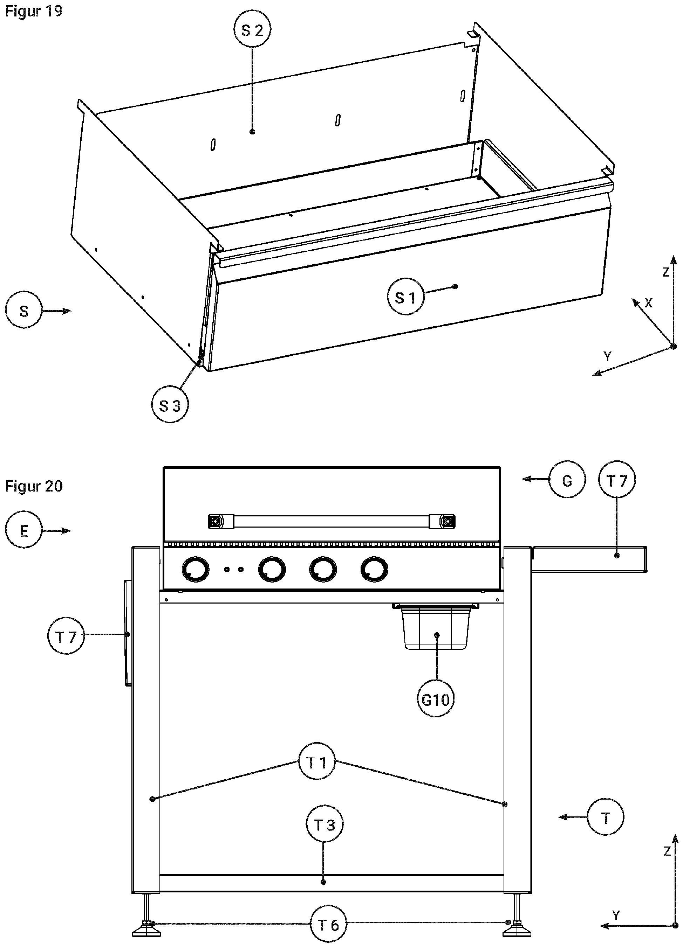

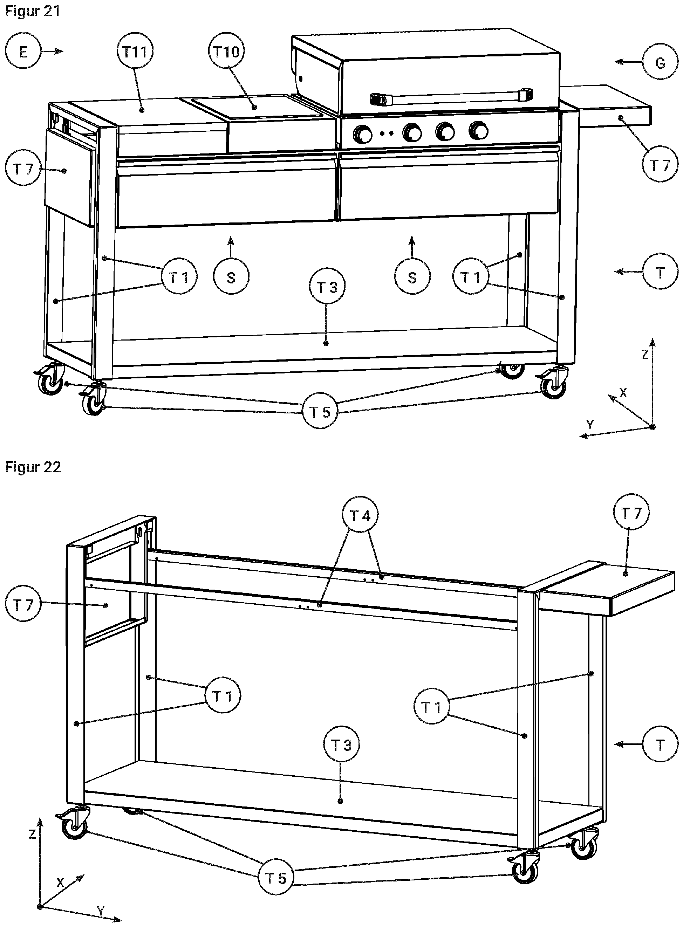

Wird gemäß einem dritten Ausführungsbeispiel die Gestelleinheit T in der Querrichtung Y entsprechend breit ausgebildet, siehe Figur 22, so können auch zwei Schubladeneinheiten S in der Querrichtung Y nebeneinander verwendet werden. Oberhalb der linken Schubladeneinheit S können dann parallel zur Elektrogrilleinheit G in der Querrichtung Y nebeneinander eine Kochfeldeinheit T10, welche auch als Kochfeld-Modul T10 bezeichnet werden kann, und eine Arbeitsflächeneinheit T11, welche auch als Arbeitsflächen-Modul T11 bezeichnet werden kann, angeordnet und verwendet werden, siehe Figur 21. Gemäß eines ersten Ausführungsbeispiels kann die Gestelleinheit T vier Rollen T5 aufweisen und mit diesen auf einem Untergrund (nicht dargestellt) rollbar aufstehen, siehe zum Beispiel Figur 1. Gemäß einem zweiten Ausführungsbeispiel kann die Gestelleinheit T stattdessen vier Standfüßen T6 aufweisen, welche auch als Gerätefüße T6 bezeichnet werden können, und mit diesen tragbar beweglich auf dem Untergrund aufstehen, siehe Figur 20.

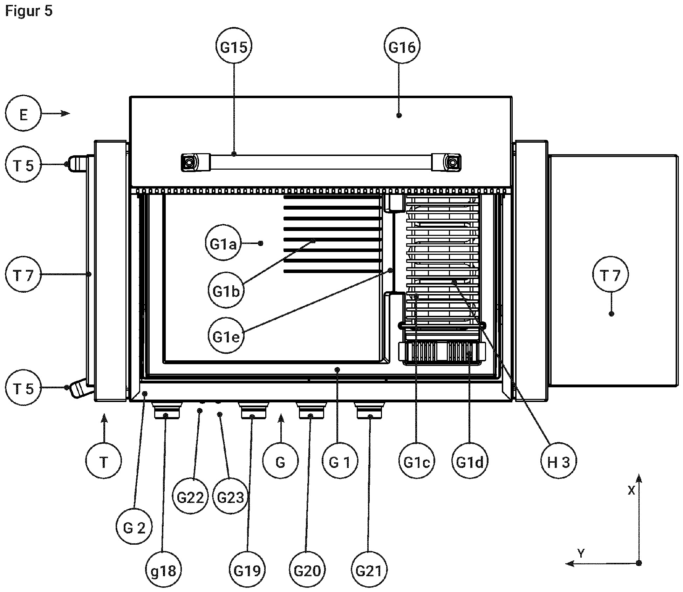

Die Elektrogrilleinheit G weist in jedem Fall eine Bratplatte G1 auf, welche einstückig, d. h. integral, aus Gusseisen ausgebildet ist und sich in der Horizontalen X, Y rechteckig erstreckt, siehe zum Beispiel Figur 5. Auf der Bratplatte G1 können Lebensmittel als Bratgut gebraten werden. Die Bratplatte G1 bildet die Elektrogrilleinheit G in der Horizontalen X, Y im Wesentlichen aus. Die Bratplatte G1 weist im linken Bereich eine erste Bratfläche G1a auf, welche rechteckig ausgebildet ist und auch als erster Bratabschnitt G1a der Bratplatte G1 bezeichnet werden kann. Im mittig hinteren Bereich der Bratplatte G1 wird eine zweite, kleinere Bratfläche G1b gebildet, welche ebenfalls rechteckig ausgebildet ist und auch als zweiter Bratabschnitt G1b bezeichnet werden kann. Die zweite Bratfläche G1b weist dabei in der Querrichtung Y verlaufende Stege (nicht bezeichnet) auf, wodurch beim Braten eine Struktur auf dem Bratgut geschaffen werden kann, wie sie von den Stegen eines Grillrosts erzeugt wird.

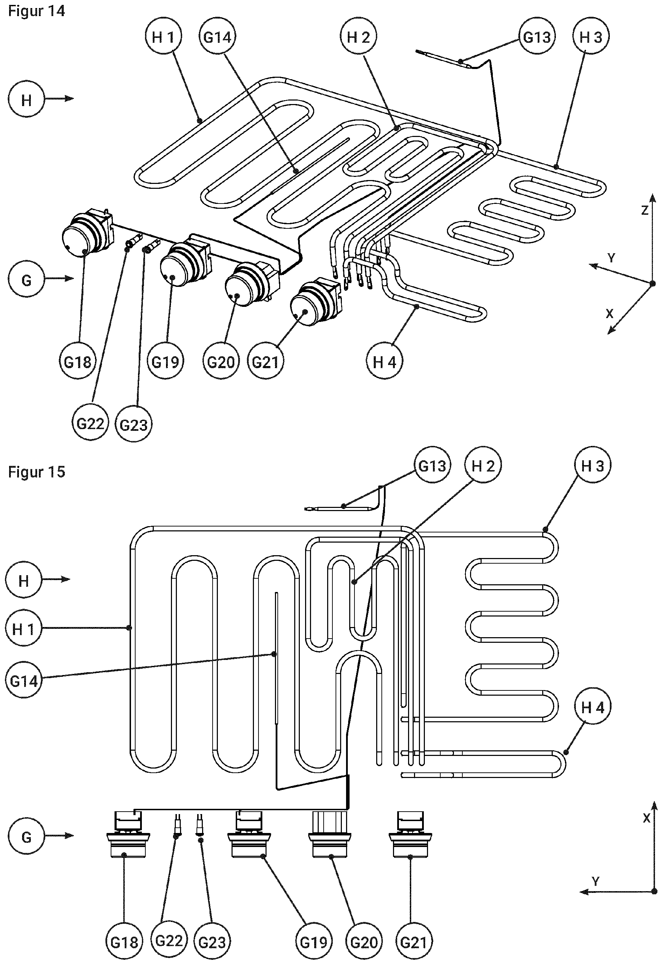

Der erste Bratabschnitt G1a und der zweite Bratabschnitt G1b können gemeinsam von einem ersten Heizelement H1 in der vertikalen Richtung Z von unten elektrisch beheizt werden, welches zu einem Heizelement H bzw. zu einem Heizmodul H gehört, siehe Figuren 14 bis 17. Dabei ist in der vertikalen Richtung Z unterhalb der zweiten Bratfläche G1b zusätzlich ein zweites Heizelement H2 angeordnet, welches die Bratplatte G1 dort zusätzlich elektrisch Beheizen kann, um dort eine höhere Wärmeleistungsdichte als in der ersten Bratfläche G1a zu erzeugen. Wird das zweite Heizelement H2 nicht betrieben, so weist die zweite Bratfläche G1b eine geringere Wärmeleistungsdichte auf als die erste Bratfläche G1a, da das erste Heizelement H1 im Bereich der zweiten Bratfläche G1b wenige Heizschleifen als im Bereich der ersten Bratfläche G1a aufweist. Auf diese Art und Weise kann die zweite Bratfläche G1b entweder bei geringerer Temperatur zur Ablage von fertig gegartem Gargut oder bei höherer Temperatur als extra heiße Fläche der Bratplatte G1 zum Braten von Gargut bei höherer Temperatur verwendet werden.

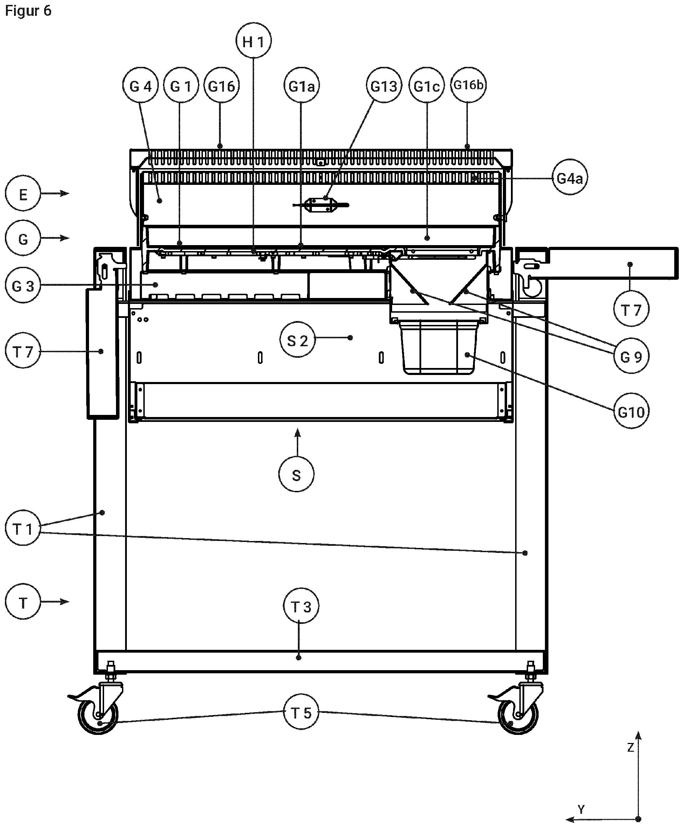

In der Querrichtung Y rechts weist die Bratplatte G1 eine in der vertikalen Richtung Z offene Aussparung (nicht bezeichnet) auf, über welcher in der vertikalen Richtung Z ein Grillrost G1f angeordnet ist. In der vertikalen Richtung Z unterhalb des Grillrosts G1f und unterhalb der Aussparung, siehe zum Beispiel Figur 6, ist ein drittes Heizelement H3 angeordnet, welches alternativ zum zweiten Heizelement H2 der zweiten Bratfläche G1b betrieben werden kann. Mittels des dritten Heizelements H3 kann Wärmestrahlung nach oberhalb des Grillrosts G1f abgegeben werden, um dort eine Grillfläche G1c als Strahlungsgrillfläche G1c auszubilden und Gargut elektrisch zu grillen.

In der Längsrichtung X vor der Grillfläche G1c ist ein Smoker G1d angeordnet, welcher im Wesentlichen von einem Behälter G1d für Holzchips gebildet wird, welcher von einem vierten Heizelement H4 elektrisch beheizt werden kann, um die Holzchips zum Schwelen zu bringen bzw. zu verräuchern. Das vierte Heizelement H4 kann dabei unabhängig von den übrigen drei Heizelementen H1, H2, H3 betrieben werden, da dies mit vergleichsweise geringer elektrischer Energie erfolgt um hierdurch ein langsames Schwelen bzw. Verräuchern zu ermöglichen.

In der vertikalen Richtung Z direkt unterhalb der Grillfläche G1c sind zwei rechteckige Ableitelemente G9 in der vertikalen Richtung Z nach unten zulaufend bzw. sich verengend und in der Querrichtung Y einander zugewandt angeordnet, welche auch als Ableitbleche G9 oder als Reflektoren G9 bezeichnet werden können. Die beiden Ableitelemente G9 sind innerhalb eines Fallschachts angeordnet, welcher von zwei parallelen Fallschachtblechen G8 gebildet wird. Die beiden Ableitelemente G9 können Stoffe wie zum Beispiel heruntertropfendes Fett oder sonstige beim Grillen entstehende Abfälle auffangen und aufgrund ihrer schrägen Ausbildung in der vertikalen Richtung Z weiter nach unten hin ableiten, um die Stoffe vom dritten Heizelement H3 möglichst schnell und wirkungsvoll fernzuhalten und so vor einem Verbrennen zu bewahren. Die beiden Ableitelemente G9 sind dabei entnehmbar vorgesehen, um eine Reinigung zu vereinfachen.

In der vertikalen Richtung Z unterhalb der beiden Ableitelemente G9 ist ein ebenfalls entnehmbarer Auffangbehälter G10 angeordnet, welcher die heruntertropfenden Stoffe auffangen und speichern kann. Der Auffangbehälter G10 ist an den unten Kanten der Fallschachtbleche G8 entnehmbar eingehängt sowie durch die Fallschachtbleche G8 in der vertikalen Richtung Z ausreichend weit zum dritten Heizelement H3 beabstandet, sodass die aufgefangenen Stoffe im Auffangbehälter G10 ebenfalls nicht verbrennen können.

Das linke Ableitelement G9 dient ferner dazu, Stoffe wie beispielsweise Fett oder sonstige beim Braten entstehende Abfälle von den beiden Bratflächen G1a, G1b aufzunehmen. Hierzu ist in der Querrichtung Y zwischen den beiden Bratflächen G1a, G1b eine sich länglich in der Längsrichtung X erstreckende Ablauföffnung G1e in Form eines Ablaufschlitzes G1e vorgesehen, siehe zum Beispiel Figur 5, durch welchen hindurch die Stoffe bzw. Abfälle auf das linke Ableitelement G9 heruntertropfen und weiter nach unten in den Auffangbehälter G10 abfließen können.

In der Längsrichtung X zum Benutzer hin wird die Bratplatte G1 von einem vorderen Gehäuseteil G2, welches auch als Gehäusevorderwand G2 bezeichnet werden kann, umgeben. Dem Benutzer zugewandt sind an dem vorderen Gehäuseteil G2, in der Querrichtung Y von links nach rechts, ein Temperaturregler G18 zur Einstellung einer Soll-Temperatur eines Grillraums 24, ein Temperaturregler G19 zur Einstellung einer Soll-Temperatur der Bratplatte G1, ein Wahlschalter G20 zum Ein- bzw. Ausschalten des zweiten Heizelements H2 der zweiten Bratfläche G1b sowie ein Temperaturregler G21 zur Einstellung einer Soll-Temperatur des Smoker G1d vorgesehen. Ferner sind dort zwei Kontrollleuchten G22, G23 angeordnet, welche zum Beispiel durch ein Aufleuchten anzeigen können, dass eine der gewünschten Soll-Temperaturen erreicht ist.

Unterhalb der Bratplatte G1 ist im Bereich der ersten Bratfläche G1a ein Temperaturfühler G14 der Bratplatte G1 vorgesehen, siehe zum Beispiel Figuren 14 und 15, sodass die Ist-Temperatur der Bratplatte G1 im Bereich der ersten Bratfläche G1a sensorisch erfasst und seitens einer Steuerungseinheit (nicht dargestellt) verwendet werden kann, um die gewünschte bzw. eingestellte Soll-Temperatur der Bratplatte G1 mittels Regelung zu erreichen und zu halten. Mittels eines Temperaturfühlers G13 des Grillraums G24, siehe ebenfalls zum Beispiel Figuren 14 und 15, kann dies entsprechend für den Grillraums G24 umgesetzt werden. Die Soll-Temperatur des Smoker G1d wird gesteuert, da dies für ein Schwelen ausreichend genau und durch die Vermeidung eines entsprechenden Temperaturfühlers kostengünstiger sein kann.

In der Längsrichtung X dem Benutzer abgewandt ist hinter dem vorderen Gehäuseteil G2 eine parallel zu diesem verlaufende Abdeckung G11 vorgesehen, um die elektronischen Elemente G18-G23 sowie die Steuerungseinheit aufzunehmen und gegenüber der Umgebung zu schützen. Dahinterliegend verläuft ferner eine Kabel- und Abschlussabdeckung G12, welcher der Aufnahme elektrischer Kabel und dergleichen dienen. In der vertikalen Richtung Z liegt von unten an dem ersten Heizelement H1 und an dem zweiten Heizelement H2 eine Abdeckplatte G5 der Heizeinheit H an, welche die Heizeinheit H ferner in der Querrichtung Y und in der Längsrichtung X randseitig in der vertikalen Richtung Z nach oben hin bis zur Unterseite der Bratplatte G1 umgibt, sodass hier ein geschlossener Raum des ersten Heizelements H1 und des zweiten Heizelements H2 der Heizeinheit H geschaffen wird. Hierdurch wird Wärmestrahlung möglichst zur Unterseite der Bratplatte G1 reflektiert sowie kann erwärmte Luft aus dem geschlossenen Raum des ersten Heizelements H1 und des zweiten Heizelements H2 der Heizeinheit H nicht entweichen, wodurch möglichst viel elektrische Leistung des ersten Heizelements H1 und des zweiten Heizelements H2 der Heizeinheit H der Bratplatte G1 zugeführt werden kann.

In der vertikalen Richtung Z ist nach unten beabstandet ein Isolationsblech G7, welches auch als Montageblech G7 bezeichnet werden kann, parallel zur Abdeckplatte G5 angeordnet, sodass zwischen der Abdeckplatte G5 und dem Montageblech G7 ein Isolationsraum G6 geschaffen wird, welcher mit einem thermisch isolierenden Material wie zum Beispiel Keramikwatte gefüllt ist. Hierdurch kann eine thermische Isolierung erreicht werden, wodurch zum Beispiel der Inhalt einer in der vertikalen Richtung Z unterhalb der Elektrogrilleinheit G angeordneten Schubladeneinheit S vor der Hitze des ersten Heizelements H1 und des zweiten Heizelements H2 der Heizeinheit H geschützt werden kann. Ferner kann möglichst viel von der elektrischen Leistung des ersten Heizelements H1 und des zweiten Heizelements H2 der Heizeinheit H für das Braten auf der Bratplatte G1 genutzt werden, was die Energieeffizienz der Elektrogrilleinheit G erhöht.

Das Isolationsblech G7 weist an allen vier Kanten jeweils eine in der vertikalen Richtung Z nach unten gebogene Lasche G7c auf, über welche das Isolationsblech G7 mit einer Mehrzahl von Befestigungslaschen G7b eines unteren Randes des rückseitigen Gehäuseteils G3 verbunden ist. Um dabei die Wärmeleitung über die Laschen G7c des Isolationsbleches G7 möglichst gering zu halten, erstrecken sich die Laschen G7c des Isolationsbleches G7 in der vertikalen Richtung Z über einen gewissen Abstand und können so Wärme an die Umgebung abstrahlen. Ferner weisen die Laschen G7c des Isolationsbleches G7 beim Übergang an die Befestigungslaschen G7b des rückseitigen Gehäuseteils G3 eine Vielzahl von Durchgangsöffnungen G7a als Lüftungsschlitze G7a auf, sodass die Fläche reduziert wird, über welche eine Wärmeleitung erfolgen kann, sowie ein Luftstrom durch die Lüftungsschlitze G7a zusätzliche Wärme abtransportieren kann. Hierdurch kann möglichst viel Wärme des ersten Heizelements H1 und des zweiten Heizelements H2 der Heizeinheit H von dem rückseitigen Gehäuseteil G3 ferngehalten werden, welches auch als Gehäuserückwand G3 bezeichnet werden kann.

Zu diesem Zweck verläuft auch parallel zum rückseitigen Gehäuseteil G3 innenliegend eine Rückwand G4 des Grillraums G24, sodass die Rückseite der Elektrogrilleinheit G doppelwandig ausgebildet ist. Hierdurch kann ein Luftpolster zwischen dem rückseitigen Gehäuseteil G3 und der innen liegenden Rückwand G4 des Grillraums G24 geschaffen werden. Die zuvor bereits beschriebenen Lüftungsschlitze G7a der Laschen G7c des Isolationsbleches G7 führen dabei am unteren Ende in diesen doppelwandigen Raum, welcher in der vertikalen Richtung Z am oberen Ende eine Vielzahl von Luftauslassöffnungen G4a als Lüftungsschlitze G4a aufweist. Auf diese Art und Weise kann in diesem Bereich mittels des Schornsteineffekts ein Luftstrom zur Abfuhr von Wärme erzeugt werden.

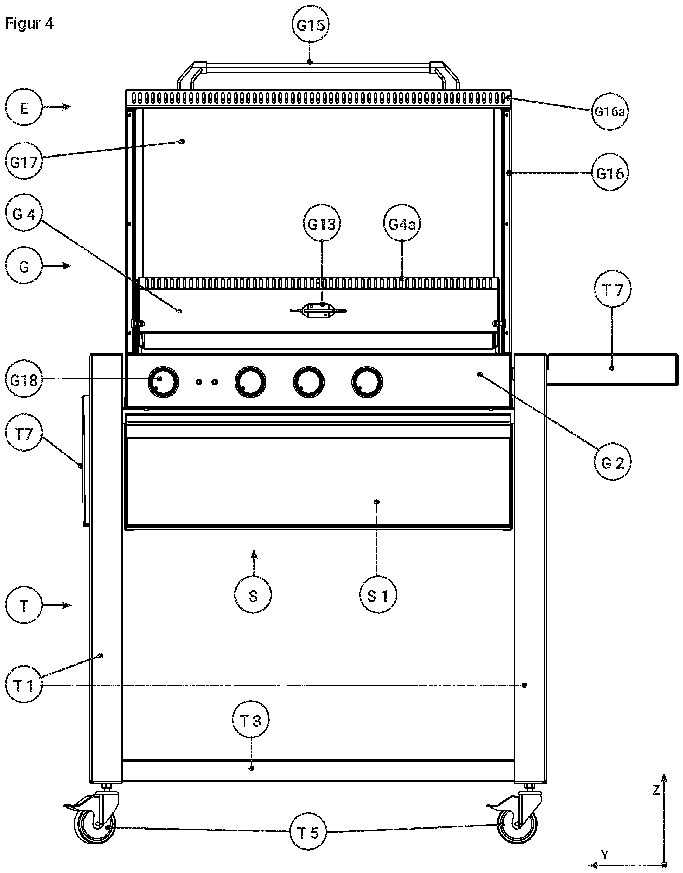

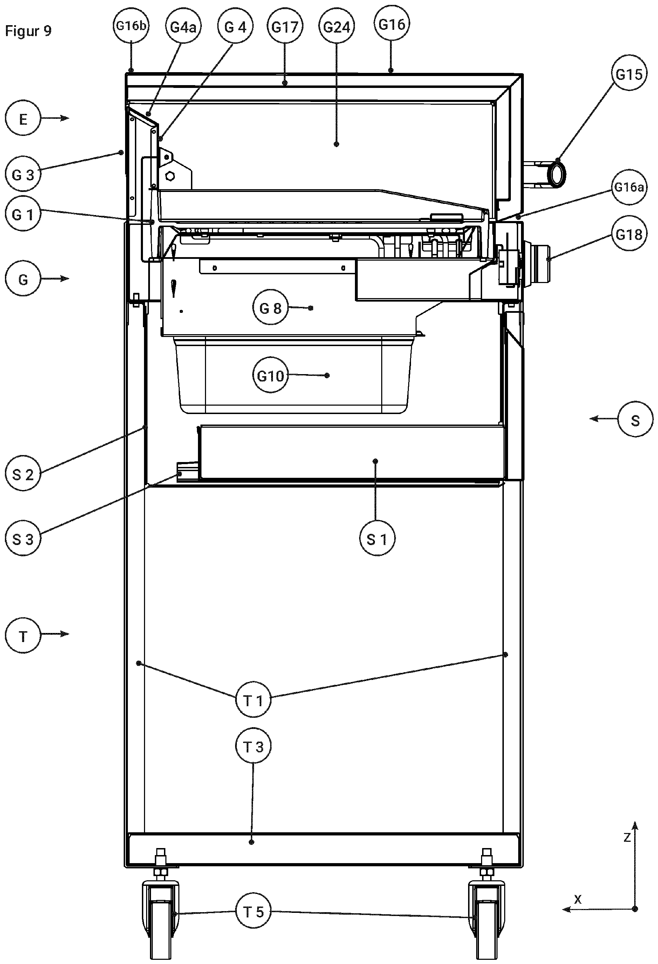

Der bereits erwähnte Grillraums G24 wird in der vertikalen Richtung Z oberhalb der Bratplatte G1 dadurch geschaffen, dass ein bewegliches bzw. klappbares Abdeckelement G16, welches gegenüber dem rückseitigen Gehäuseteil G3 mittels zweier Scharniere (nicht bezeichnet) um ca. 90° bewegt bzw. geklappt werden kann, von einer geöffneten Stellung, siehe zum Beispiel Figur 4, in eine geschlossene Stellung, siehe zum Beispiel Figur 9, vom Benutzer heruntergeklappt wird. Hierzu kann der Benutzer einen entsprechenden Griff G15 greifen. Das klappbare Abdeckelement G16 kann auch als klappbarer Deckel G16 bezeichnet werden.

Um dabei auch die Erwärmung des klappbaren Abdeckelements G16 bzw. dessen Außenseite möglichst gering zu halten und so den Benutzer und weitere Personen vor Verbrennungen zu schützen, ist auch das Abdeckelement G16 doppelwandig ausgebildet, indem innenseitig ein Innenteil G17 parallel zum Abdeckelement G16 verlaufend angeordnet ist. Der doppelwandige Raum dazwischen weist in der vertikalen Richtung Z an seinem unteren Ende, in der geschlossenen Stellung betrachtet, Lufteinlassöffnungen G16a auf, durch welche hindurch Luft in den doppelwandigen Raum einströmen kann. Die einströmende Luft kann Wärme vom Innenteil G17 aufnehmen und nach außen hin abführen, indem die Luft den doppelwandigen Raum am in der Längsrichtung X hinteren Ende des Abdeckelements G16 durch dort vorhandene Luftauslassöffnungen G16b wieder verlässt. Die Schubladeneinheit S weist eine Schublade S1 auf, welche mittels zweier in der Querrichtung Y seitlicher Schubladenauszüge S3, welche auch als Auszugsschienen S3 bezeichnet werden können, gegenüber einem Schubladengehäuse S2 in der Längsrichtung X beweglich ist und vom Benutzer so geöffnet oder geschlossen werden kann, siehe zum Beispiel Figur 19.

Die Gestelleinheit T weist an ihren vier Ecken jeweils ein Vertikalelement T1 auf, welche auch als Ständerrahmen T1 bezeichnet werden können. Die Vertikalelemente T1 sind mit ihren unteren Enden feststehend mit einem rechteckigen Bodenteil T3 verbunden, welches sich in der Horizontalen X, Y erstreckt. In der vertikalen Richtung Z unterhalb des Bodenteils T3 sind an den vier Ecken jeweils die Rolle T5 oder der Standfuß T6 befestigt. In der Querrichtung Y sind die Vertikalelemente T1 paarweise durch zwei in der Querrichtung Y verlaufende Querelemente T4 feststehend miteinander verbunden, welche auch als Rahmenstreben T4 bezeichnet werden können. In der Längsrichtung X gehen die Vertikalelemente T1 paarweise rechtwinklig bogenförmig ineinander über. An den beiden Querelementen T4 können die zuvor beschriebenen Module befestigt und insbesondere in der vertikalen Richtung Z von oben eingesetzt werden, was die Umsetzung der Modularität entsprechend vereinfachen kann.

### BEZUGSZEICHENLISTE (Teil der Beschreibung)

X Längsrichtung; Tiefe; Länge
Y Querrichtung; Breite
Z vertikale Richtung; Höhe
X, Y Horizontale; horizontale Ebene
E portable Elektrogrillvorrichtung; portable Elektro-BBQ-Vorrichtung
G Elektrogrilleinheit; Elektrogrillmodul
G1 Bratplatte
G1a erste Bratfläche bzw. erster Bratabschnitt der Bratplatte G1
G1b zweite Bratfläche bzw. zweiter Bratabschnitt der Bratplatte G1; extra heiße Fläche der Bratplatte G1
G1c (Strahlungs-)Grillfläche
G1d Smoker; Behälter für Holzchips
G1e Ablauföffnung; Ablaufschlitz
G1f Grillrost bzw. Bratrost der Grillfläche G1c
G2 vorderes Gehäuseteil; Gehäusevorderwand
G3 rückseitiges Gehäuseteil; Gehäuserückwand
G4 Rückwand des Grillraums 24
G4a Luftauslassöffnungen bzw. Lüftungsschlitze der Rückwand G4 des Grillraums 24
G5 Abdeckplatte der Heizeinheit H
G6 Isolationsraum
G7 Isolationsblech; Montageblech
G7a Durchgangsöffnungen bzw. Lüftungsschlitze der Lasche G7c des Isolationsblechs G7
G7b Befestigungslasche des rückseitigen Gehäuseteils G3
G7c Lasche des Isolationsblechs G7
G8 Fallschachtbleche
G9 Ableitelemente; Ableitbleche; Reflektoren
G10 Auffangbehälter
G11 Abdeckung
G12 Kabel- und Anschlussabdeckung
G13 Temperaturfühler des Grillraums G24
G14 Temperaturfühler der Bratplatte G1
G15 Griff der beweglichen Abdeckung 16
G16 bewegliches bzw. klappbares Abdeckelement; beweglicher Deckel
G16a Lufteinlassöffnungen der klappbaren Abdeckung 16
G16b Luftauslassöffnungen der klappbaren Abdeckung 16
G17 Innenteil der klappbaren Abdeckung 16
G18 Temperaturregler des Grillraums 24
G19 Temperaturregler der Bratplatte G1
G20 Wahlschalter
G21 Temperaturregler für Smoker G1d
G22 Kontrollleuchte
G23 Kontrollleuchte
G24 Grillraum
H Heizeinheit; Heizmodul
H1 erstes Heizelement der ersten Bratfläche G1a und der zweiten Bratfläche G1b
H2 zweites Heizelement der zweiten Bratfläche G1b
H3 drittes Heizelement der (Strahlungs-)Grillfläche G1c
H4 viertes Heizelement des Smokers G1d
S Schubladeneinheit; Schubladenmodul
S1 Schublade
S2 Schubladengehäuse
S3 Schubladenauszüge; Auszugsschienen
T Gestelleinheit; Gestellmodul; Ständer
T1 Vertikalelemente; Ständerrahmen
T3 Bodenteil
T4 Querelemente; Rahmenstrebe
T5 Rolle
T6 Standfüße; Gerätefüße
T7 bewegliches bzw. klappere Seitentischeinheit
T8 steckbare Schneidebretteinheit
T9 schräge Aussparung
T10 Kochfeldeinheit; Kochfeld-Modul
T11 Arbeitsflächeneinheit; Arbeitsflächen-Modul

## Patentansprüche

1. Portable Elektrogrillvorrichtung (E) zum Garen von Lebensmitteln mit wenigstens einer Elektrogrilleinheit (G) mit wenigstens einer Grillfläche (G1c), welche ausgebildet ist, elektrisch erhitzt zu werden, wobei die Elektrogrilleinheit (G) wenigstens eine erste Bratfläche (G1a) aufweist, welche ausgebildet ist, elektrisch erhitzt zu werden, wobei die Elektrogrilleinheit (G) eine Auffangvorrichtung aufweist, die zum Auffangen von beim Grillen entstehenden Stoffen, wie Fett oder Bratgutsäften, bestimmt ist, sowie Leitelementen zum Leiten von beim Grillen entstehenden Stoffen zur Auffangvorrichtung, wobei die Elektrogrilleinheit (G) eine zweite Bratfläche (G1b) aufweist, welche ausgebildet ist, elektrisch erhitzt zu werden, wobei die Elektrogrilleinheit (G) wenigstens ein erstes Heizelement (H1) aufweist, welches sowohl in der vertikalen Richtung (Z) unterhalb der ersten Bratfläche (G1a) als auch unterhalb der zweiten Bratfläche (G1b) angeordnet und ausgebildet ist, die erste Bratfläche (G1a) und die zweite Bratfläche (G1b) gemeinsam zu erwärmen, und die Elektrogrilleinheit (G) wenigstens eine Ablauföffnung (G1e), vorzugsweise einen Ablaufschlitz (G1e) aufweist, welche zwischen der ersten Bratfläche (G1a) auf der einen Seite und der Grillfläche (G1c) auf der anderen Seite angeordnet ist, **dadurch gekennzeichnet, dass** die Elektrogrilleinheit (G) als Auffangvorrichtung einen entnehmbaren Auffangbehälter (G10) aufweist, welcher in der vertikalen Richtung (Z) direkt unterhalb der Grillfläche (G1c), und in der vertikalen Richtung (Z) durch wenigstens einen Fallschacht (G8) gegenüber der Grillfläche (G1c) beabstandet, angeordnet ist, und als Leitelement wenigstens ein schräg zur vertikalen Richtung (Z) ausgerichtetes Ableitelement (G9) aufweist, welches in der vertikalen Richtung (Z) zwischen der ersten Bratfläche (G1a) und dem Auffangbehälter (G10) angeordnet ist, wobei das Ableitelement (G9) unterhalb der Ablauföffnung (G1e) angeordnet ist, wobei die zweite Bratfläche (G1b) ausgebildet ist, entweder mit einer ersten elektrischen Leistungsdichte, welche geringer als die elektrische Leistungsdichte der ersten Bratfläche (G1a) ist, oder mit einer zweiten elektrischen Leistungsdichte, welche größer als die elektrische Leistungsdichte der ersten Bratfläche (G1a) ist, betrieben zu werden, wobei das erste Heizelement (H1) unterhalb der zweiten Bratfläche (G1b) ausgebildet ist, vorzugsweise durch weniger Heizschleifen, eine geringere elektrische Leistungsdichte als unterhalb der ersten Bratfläche (G1a) zu erzeugen, die Elektrogrilleinheit (G) wenigstens ein zweites Heizelement (H2) aufweist, welches lediglich unterhalb der zweiten Bratfläche (G1b) angeordnet und ausgebildet ist, die zweite Bratfläche (G1b) zusätzlich zu dem ersten Heizelement (H2) zu erwärmen, und dass die Elektrogrilleinheit (G) wenigstens ein drittes Heizelementes (H3) aufweist, welches lediglich unterhalb der Grillfläche (G1c) angeordnet und ausgebildet ist, die Grillfläche (G1c) zu erwärmen, wobei das zweite Heizelement (H2) der zweiten Bratfläche (G1b) und das dritte Heizelement (H3) der Grillfläche (G1c) ausgebildet sind, lediglich alternativ zueinander betrieben zu werden.

2. Portable Elektrogrillvorrichtung (E) nach Anspruch 1, **dadurch gekennzeichnet, dass** die Elektrogrilleinheit (G) wenigstens ein Paar von, vorzugsweise entnehmbaren, Ableitelementen (G9) aufweist, welche parallel zueinander und einander schräg zur vertikalen Richtung (Z) zugewandt unterhalb der ersten Bratfläche (G1a) und der Grillfläche (G1c) angeordnet sind.

3. Portable Elektrogrillvorrichtung (E) nach einem der vorangehenden Ansprüche, **dadurch gekennzeichnet, dass** die Elektrogrilleinheit (G) einen Smoker (G1d) aufweist, welcher ausgebildet ist, elektrisch erhitzt zu werden und rauchbildendes Material zu verräuchern, wobei der Smoker (G1d) ausgebildet ist, mit einer elektrischen Leistung betrieben zu werden, welche geringer und unabhängig von der elektrischen Leistung der ersten Bratfläche (G1a) und der Grillfläche (G1c), vorzugsweise ferner einer zweiten Bratfläche (G1b), ist.

4. Portable Elektrogrillvorrichtung (E) nach einem der vorangehenden Ansprüche, **dadurch gekennzeichnet, dass** die erste Bratfläche (G1a), vorzugsweise ferner eine zweite Bratfläche (G1b), von einer in der Horizontalen (X, Y) geschlossenen Bratplatte (G1) gebildet wird, wobei ein erstes Heizelement (H1) der ersten Bratfläche (G1a), vorzugsweise ferner ein zweites Heizelement (H2) der zweiten Bratfläche (G1b), in der vertikalen Richtung (Z) abgewandt an der Bratplatte (G1) berührend anliegend angeordnet und ausgebildet ist, die Bratplatte (G1) wenigstens im Bereich der ersten Bratfläche (G1a), vorzugsweise und im Bereich der zweiten Bratfläche (G1b), zu erhitzen.

5. Portable Elektrogrillvorrichtung (E) nach Anspruch 1, **dadurch gekennzeichnet, dass** die Elektrogrilleinheit (G) wenigstens eine Abdeckplatte (G5) aufweist, welche der Bratplatte (G1) in der vertikalen Richtung (Z) abgewandt unterhalb des ersten Heizelements (H1), vorzugsweise und des zweiten Heizelements (H2), vorzugsweise berührend anliegend, angeordnet und ausgebildet ist, Strahlungswärme des ersten Heizelements (H1), vorzugsweise und des zweiten Heizelements (H2), zur Bratplatte (G1) hin zu reflektieren.

6. Portable Elektrogrillvorrichtung (E) nach Anspruch 1, **dadurch gekennzeichnet, dass** die Elektrogrilleinheit (G) wenigstens einen Isolationsraum (G6) aufweist, welcher dem ersten Heizelement (H1), vorzugsweise und dem zweiten Heizelement (H2), in der vertikalen Richtung (Z) abgewandt unterhalb der Abdeckplatte (G5) angeordnet und, vorzugsweise durch eine Füllung mit Isolationsmaterial, ausgebildet ist, die Abdeckplatte (G5) wenigstens in der vertikalen Richtung (Z) thermisch zu isolieren.

7. Portable Elektrogrillvorrichtung (E) nach Anspruch 1, **dadurch gekennzeichnet, dass** die Elektrogrilleinheit (G) wenigstens ein Isolationsblech (G7) aufweist, welches dem ersten Heizelement (H1), vorzugsweise und dem zweiten Heizelement (H2), in der vertikalen Richtung (Z) abgewandt den Isolationsraum (G6) begrenzt, wobei das Isolationsblech (G7) mit wenigstens einem Gehäuseteil (2, 3) der Elektrogrilleinheit (G) verbunden ist, wobei das Isolationsblech (G7) im Bereich der Verbindung mit dem Gehäuseteil (2, 3) der Elektrogrilleinheit (G) mittels einer Lasche (G7c) in der vertikalen Richtung (Z) beabstandet ist und/oder eine Vielzahl von Durchgangsöffnungen (G7a) aufweist.

8. Portable Elektrogrillvorrichtung (E) nach einem der vorangehenden Ansprüche, **dadurch gekennzeichnet, dass** die Elektrogrilleinheit (G) wenigstens ein bewegliches Abdeckelement (G16) aufweist, welches ausgebildet ist, zwischen einer geschlossenen und einer geöffneten Stellung, vorzugsweise durch Klappen, bewegt zu werden und in der vertikalen Richtung (Z) oberhalb der Grillfläche (G1c) und der ersten Bratfläche (G1a) einen geschlossenen Grillraum (24) zu bilden.

9. Portable Elektrogrillvorrichtung (E) nach Anspruch 1, **dadurch gekennzeichnet, dass** das bewegliche Abdeckelement (G16) doppelwandig ausgebildet ist, wobei das bewegliche Abdeckelement (G16) vorzugsweise wenigstens eine Lufteinlassöffnung (G16a) und wenigstens eine Luftauslassöffnung (G16b) aufweist, welche ausgebildet sind, einen Luftstrom durch den doppelwandigen Bereich des beweglichen Abdeckelements (G16) hindurch zu erzeugen.

10. Portable Elektrogrillvorrichtung (E) nach einem der vorangehenden Ansprüche, **dadurch gekennzeichnet, dass** ein dem Benutzer in der Längsrichtung (X) abgewandtes rückseitiges Gehäuseteil (G3) der Elektrogrilleinheit (G) mittels einer parallelen Rückwand (G4) der Elektrogrilleinheit (G) doppelwandig ausgebildet ist, wobei das rückseitige Gehäuseteil (G3) und/oder die Rückwand (G4) vorzugsweise wenigstens eine Lufteinlassöffnung, vorzugsweise als Durchgangsöffnungen (G7a) einer Lasche (G7c) eines Isolationsblech (G7), und wenigstens eine Luftauslassöffnung (G4a) aufweist, welche ausgebildet sind, einen Luftstrom durch den doppelwandigen Bereich der rückseitigen Gehäuseteil (G3) und der Rückwand (G4) der Elektrogrilleinheit (G) hindurch zu erzeugen.

11. Portable Elektrogrillvorrichtung (E) nach einem der vorangehenden Ansprüche, **gekennzeichnet durch** wenigstens eine Schubladeneinheit (S), welche, vorzugsweise direkt, in der vertikalen Richtung (Z) unterhalb der Elektrogrilleinheit (G) angeordnet ist.

12. Portable Elektrogrillvorrichtung (E) nach einem der vorangehenden Ansprüche, **gekennzeichnet durch** wenigstens eine bewegliche Seitentischeinheit (T7), welche, vorzugsweise in der Querrichtung (Y) seitlich, neben der Elektrogrilleinheit (G) angeordnet ist.

13. Portable Elektrogrillvorrichtung (E) nach einem der vorangehenden Ansprüche, **gekennzeichnet durch** wenigstens eine steckbare Schneidebretteinheit (T8), welche, vorzugsweise in der Querrichtung (Y) seitlich, neben der Elektrogrilleinheit (G) angeordnet ist.

14. Portable Elektrogrillvorrichtung (E) nach einem der vorangehenden Ansprüche, **gekennzeichnet durch** wenigstens eine Kochfeldeinheit (T10), welche, vorzugsweise in der Querrichtung (Y) seitlich, neben der Elektrogrilleinheit (G) angeordnet ist.

15. Portable Elektrogrillvorrichtung (E) nach einem der vorangehenden Ansprüche, **gekennzeichnet durch** wenigstens eine Arbeitsflächeneinheit (T11), welche, vorzugsweise in der Querrichtung (Y) seitlich, neben der Elektrogrilleinheit (G) angeordnet ist.

16. Portable Elektrogrillvorrichtung (E) nach einem der vorangehenden Ansprüche, **gekennzeichnet durch** eine Gestelleinheit (T), welche portabel sowie zur Aufnahme wenigstens der einen Elektrogrilleinheit (G), vorzugsweise ferner zur Aufnahme wenigstens einer Schubladeneinheit (S), wenigstens einer beweglichen Seitentischeinheit (T7), wenigstens einer steckbaren Schneidebretteinheit (T8), wenigstens einer Kochfeldeinheit (T10) und/oder wenigstens einer Arbeitsflächeneinheit (T11) ausgebildet ist.

## Claims

1. A portable electric grilling device (E) for cooking food with at least one electric grilling unit (G) with at least one grilling surface (G1c), which is designed to be heated electrically, the electric grilling unit (G) having at least one first frying surface (G1a), which is designed to be heated electrically, the electric grilling unit (G) having a collecting device, which is intended for collecting substances, such as fat or frying juices, produced during grilling, and guiding elements for guiding substances produced during grilling to the collecting device, the electric grilling unit (G) having a second frying surface (G1b), which is designed to be heated electrically, the electric grilling unit (G) having at least one first heating element (H1), which is arranged both in the vertical direction (Z) below the first frying surface (G1a) and below the second frying surface (G1b) and is designed to heat the first frying surface (G1a) and the second frying surface (G1b) together, and the electric grilling unit (G) having at least one drain opening (G1e), preferably a drain slot (G1e), which is arranged between the first frying surface (G1a) on one side and the grilling surface (G1c) on the other side, **characterized in that** the electric grilling unit (G) has a removable collecting container (G10) as a collecting device, which is arranged in the vertical direction (Z) directly below the grilling surface (G1c), and in the vertical direction (Z) is spaced from the grilling surface (G1c) by at least one drop shaft (G8), and as a guide element has at least one deflector element (G9) aligned obliquely to the vertical direction (Z), which is arranged in the vertical direction (Z) between the first frying surface (G1a) and the collecting container (G10), wherein the deflector element (G9) is arranged below the drain opening (G1e), wherein the second frying surface (G1b) is designed to be operated either with a first electrical power density, which is lower than the electrical power density of the first frying surface (G1a), or with a second electrical power density, which is greater than the electrical power density of the first frying surface (G1a), the first heating element (H1) being formed below the second frying surface (G1b), preferably by means of fewer heating loops, to generate a lower electrical power density than below the first frying surface (G1a), the electric grilling unit (G) having at least one second heating element (H2), which is arranged below the second frying surface (G1b) only and is designed to heat the second frying surface (G1b) in addition to the first heating element (H2), and **in that** the electric grilling unit (G) has at least one third heating element (H3), which is arranged below the grilling surface (G1c) only and is designed to heat the grilling surface (G1c), wherein the second heating element (H2) of the second frying surface (G1b) and the third heating element (H3) of the grilling surface (G1c) are designed to be operated alternatively to one another only.

2. The portable electric grilling device (E) according to claim 1, **characterized in that** the electric grilling unit (G) comprises at least one pair of, preferably removable, deflector elements (G9), which are arranged parallel to each other and facing each other obliquely to the vertical direction (Z) below the first frying surface (G1a) and the grilling surface (G1c).

3. The portable electric grilling device (E) according to one of the preceding claims, **characterized in that** the electric grilling device (G) has a smoker (G1d), which is designed to be heated electrically and to smoke smoke-forming material, the smoker (G1d) being designed to be operated with an electrical power, which is lower than and independent of the electrical power of the first frying surface (G1a) and the grilling surface (G1c), preferably also of a second frying surface (G1b).

4. The portable electric grilling device (E) according to one of the preceding claims, **characterized in that** the first frying surface (G1a), preferably also a second frying surface (G1b), is formed by a frying plate (G1) closed in the horizontal direction (X, Y), a first heating element (H1) of the first frying surface (G1a), preferably also a second heating element (H2) of the second frying surface (G1b), is arranged facing away in the vertical direction (Z) in contact with the frying plate (G1) and is designed to heat the frying plate (G1) at least in the region of the first frying surface (G1a), preferably also in the region of the second frying surface (G1b).

5. The portable electric grilling device (E) according to claim 1, **characterized in that** the electric grilling unit (G) has at least one cover plate (G5), which faces away from the frying plate (G1) in the vertical direction (Z) below the first heating element (H1), preferably also the second heating element (H2), preferably in contact therewith, and is designed to reflect radiant heat from the first heating element (H1), preferably also the second heating element (H2), towards the frying plate (G1).

6. The portable electric grilling device (E) according to claim 1, **characterized in that** the electric grilling unit (G) has at least one insulation space (G6), which is arranged facing away from the first heating element (H1), preferably also the second heating element (H2), in the vertical direction (Z) below the cover plate (G5) and is designed, preferably by filling with insulation material, to thermally insulate the cover plate (G5) at least in the vertical direction (Z).

7. The portable electric grilling device (E) according to claim 1, **characterized in that** the electric grilling unit (G) has at least one insulating plate (G7), which delimits the insulation space (G6) facing away from the first heating element (H1), preferably also the second heating element (H2), in the vertical direction (Z), the insulating plate (G7) being connected to at least one housing part (2, 3) of the electric grilling unit (G), the insulating plate (G7) being spaced apart in the vertical direction (Z) in the region of the connection to the housing part (2, 3) of the electric grilling unit (G) by means of a tab (G7c) and/or having a plurality of through-openings (G7a).

8. The portable electric grilling device (E) according to one of the preceding claims, **characterized in that** the electric grilling unit (G) has at least one movable cover element (G16), which is designed to be moved between a closed and an open position, preferably by flaps, and to form a closed grilling space (24) in the vertical direction (Z) above the grilling surface (G1c) and the first frying surface (G1a).

9. The portable electric grilling device (E) according to claim 1, **characterized in that** the movable cover element (G16) is double-walled, the movable cover element (G16) preferably having at least one air inlet opening (G16a) and at least one air outlet opening (G16b), which are designed to generate an air flow through the double-walled region of the movable cover element (G16).

10. The portable electric grilling device (E) according to one of the preceding claims, **characterized in that** a rear housing part (G3) of the electric grilling unit (G) facing away from the user in the longitudinal direction (X) is double-walled by means of a parallel rear wall (G4) of the electric grilling unit (G), the rear housing part (G3) and/or the rear wall (G4) preferably having at least one air inlet opening, preferably as through-openings (G7a) of a tab (G7c) of an insulation plate (G7), and at least one air outlet opening (G4a), which are configured to produce an air flow through the double-walled section of the rear housing part (G3) and the rear wall (G4) of the electric grilling unit (G).

11. The portable electric grilling device (E) according to one of the preceding claims, **characterized in** at least one drawer unit (S), which is arranged, preferably directly, in the vertical direction (Z) underneath the electric grilling unit (G).

12. The portable electric grilling device (E) according to one of the preceding claims, **characterized in** at least one movable side table unit (T7), which is arranged, preferably laterally in the transverse direction (Y), sideways of the electric grilling unit (G).

13. The portable electric grilling device (E) according to one of the preceding claims, **characterized in** at least one pluggable cutting board unit (T8), which is arranged, preferably laterally in the transverse direction (Y), next to the electric grilling unit (G).

14. The portable electric grilling device (E) according to one of the preceding claims, **characterized by** at least one hob unit (T10), which is arranged, preferably laterally in the transverse direction (Y), next to the electric grilling unit (G).

15. The portable electric grilling device (E) according to one of the preceding claims, **characterized by** at least one work surface unit (Tll), which is arranged, preferably laterally in the transverse direction (Y), next to the electric grilling unit (G).

16. The portable electric grilling device (E) according to one of the preceding claims, **characterized by** a rack unit (T), which is designed to be portable and to accommodate at least the one electric grilling unit (G), preferably furthermore to accommodate at least one drawer unit (S), at least one movable side table unit (T7), at least one plug-in cutting board unit (TB), at least one hob unit (T10), and/or at least one work surface unit (T11).

## Revendications

1. Dispositif de gril électrique portatif (E) pour la cuisson d'aliments, comprenant au moins une unité de gril électrique (G) avec au moins une surface de gril (G1c), qui est conçue pour être chauffée électriquement, l'unité de gril électrique (G) présentant au moins une première surface de cuisson (G1a), qui est conçue pour être chauffée électriquement, l'unité de gril électrique (G) présentant un dispositif de collecte, qui est destiné à collecter les substances produites lors de la grillade, telles que la graisse ou les jus de cuisson, ainsi que des éléments de guidage pour guider les substances produites lors de la grillade vers le dispositif de collecte, l'unité de gril électrique (G) présentant une deuxième surface de cuisson (G1b), qui est conçue pour être chauffée électriquement, l'unité de gril électrique (G) présentant au moins un premier élément chauffant (H1), qui est disposé aussi bien dans la direction verticale (Z) en dessous de la première surface de cuisson (G1a) qu'en dessous de la deuxième surface de cuisson (G1b) et qui est conçu pour chauffer conjointement la première surface de cuisson (G1a) et la deuxième surface de cuisson (G1b), et l'unité de gril électrique (G) comporte au moins une ouverture d'évacuation (G1e), de préférence une fente d'évacuation (G1e), qui est disposée entre la première surface de cuisson (G1a) d'un côté et la surface de gril (G1c) de l'autre côté, **caractérisée en ce que** l'unité de gril électrique (G) présente comme dispositif de réception un récipient de récupération (G10) amovible, qui est disposé dans la direction verticale (Z) directement en dessous de la surface de gril (G1c) et qui est espacé dans la direction verticale (Z) de la surface de gril (G1c) par au moins un puits de chute (G8), et présente comme élément de guidage au moins un élément de dérivation (G9) orienté obliquement par rapport à la direction verticale (Z), qui est disposé dans la direction verticale (Z) entre la première surface de cuisson (G1a) et le récipient de récupération (G10), l'élément de dérivation (G9) étant disposé en dessous de l'ouverture d'évacuation (G1e), la deuxième surface de cuisson (G1b) étant réalisée soit avec une première densité de puissance électrique, qui est inférieure à la densité de puissance électrique de la première surface de cuisson (G1a), ou avec une deuxième densité de puissance électrique, qui est supérieure à la densité de puissance électrique de la première surface de cuisson (G1a), le premier élément chauffant (H1) étant formé sous la deuxième surface de cuisson (G1b), de préférence par moins de boucles de chauffage, pour produire une densité de puissance électrique inférieure à celle sous la première surface de cuisson (G1a), l'unité de gril électrique (G) comprenant au moins un deuxième élément chauffant (H2), qui est disposé uniquement en dessous de la deuxième surface de cuisson (G1b) et qui est conçu pour chauffer la deuxième surface de cuisson (G1b) en plus du premier élément chauffant (H2), et **en ce que** l'unité de gril électrique (G) présente au moins un troisième élément chauffant (H3), qui est disposé uniquement sous la surface de gril (G1c) et est conçu pour chauffer la surface de gril (G1c), le deuxième élément chauffant (H2) de la deuxième surface de cuisson (G1b) et le troisième élément chauffant (H3) de la surface de gril (G1c) étant conçus pour être actionnés uniquement en alternance l'un par rapport à l'autre.

2. Dispositif de gril électrique portatif (E) selon la revendication 1, **caractérisé en ce que** l'unité de gril électrique (G) comprend au moins une paire d'éléments de dérivation (G9), de préférence amovibles, qui sont disposés parallèlement l'un à l'autre et tournés l'un vers l'autre en oblique par rapport à la direction verticale (Z) en dessous de la première surface de cuisson (G1a) et de la surface de gril (G1c).

3. Dispositif de gril électrique portatif (E) selon l'une quelconque des revendications précédentes, **caractérisé en ce que** l'unité de gril électrique (G) comprend un fumoir (G1d) conçu pour être chauffé électriquement et pour fumer un matériau produisant de la fumée, le fumoir (G1d) étant conçu pour fonctionner avec une puissance électrique, qui est inférieure à et indépendante de la puissance électrique de la première surface de cuisson (G1a) et de la surface de gril (G1c), de préférence en outre d'une deuxième surface de cuisson (G1b).

4. Dispositif de gril électrique portatif (E) selon l'une des revendications précédentes, **caractérisé en ce que** la première surface de cuisson (G1a), de préférence en outre une deuxième surface de cuisson (G1b), est formée par une plaque de cuisson (G1) fermée dans la direction horizontale (X, Y), un premier élément chauffant (H1) de la première surface de cuisson (G1a), de préférence en outre un deuxième élément chauffant (H2) de la deuxième surface de cuisson (G1b), est disposé à l'opposé dans la direction verticale (Z) en étant en contact avec la plaque de cuisson (G1) et est conçu pour chauffer la plaque de cuisson (G1) au moins dans la zone de la première surface de cuisson (G1a), de préférence aussi dans la zone de la deuxième surface de cuisson (G1b).

5. Dispositif de gril électrique portatif (E) selon la revendication 1, **caractérisé en ce que** l'unité de gril électrique (G) comprend au moins une plaque de recouvrement (G5), qui est opposée à la plaque de cuisson (G1) dans la direction verticale (Z) en dessous du premier élément chauffant (H1), de préférence aussi du deuxième élément chauffant (H2), de préférence en contact, et est conçu pour réfléchir la chaleur de rayonnement du premier élément chauffant (H1), de préférence aussi du deuxième élément chauffant (H2), vers la plaque de cuisson (G1).

6. Dispositif de gril électrique portatif (E) selon la revendication 1, **caractérisé en ce que** l'unité de gril électrique (G) présente au moins un espace d'isolation (G6), qui est adjacent au premier élément chauffant (H1), de préférence aussi au deuxième élément chauffant (H2), dans la direction verticale (Z) en dessous de la plaque de recouvrement (G5) et est conçu, de préférence par un remplissage avec un matériau isolant, pour isoler thermiquement la plaque de recouvrement (G5) au moins dans la direction verticale (Z).

7. Dispositif de gril électrique portatif (E) selon la revendication 1, **caractérisé en ce que** l'unité de gril électrique (G) comprend au moins une tôle d'isolation (G7) qui délimite l'espace d'isolation (G6) à l'opposé du premier élément chauffant (H1), de préférence aussi du deuxième élément chauffant (H2), dans la direction verticale (Z), la tôle d'isolation (G7) étant reliée à au moins une partie de boîtier (2, 3) de l'unité de gril électrique (G), la tôle d'isolation (G7) étant espacée dans la direction verticale (Z) dans la zone de la liaison avec la partie de boîtier (2, 3) de l'unité de gril électrique (G) au moyen d'une languette (G7c) et/ou présentant une pluralité d'ouvertures de passage (G7a).

8. Dispositif de gril électrique portatif (E) selon l'une quelconque des revendications précédentes, **caractérisé en ce que** l'unité de gril électrique (G) comprend au moins un élément de couverture mobile (G16), qui est conçu pour être déplacé entre une position fermée et une position ouverte, de préférence par des volets, et pour former un espace de gril fermé (24) dans la direction verticale (Z) au-dessus de la surface de gril (G1c) et de la première surface de cuisson (G1a).

9. Dispositif de gril électrique portatif (E) selon la revendication 1, **caractérisé en ce que** l'élément de couverture mobile (G16) est à double paroi, l'élément de couverture mobile (G16) comprenant de préférence au moins une ouverture d'entrée d'air (G16a) et au moins une ouverture de sortie d'air (G16b), qui sont conçues pour générer un flux d'air à travers la zone à double paroi de l'élément de couverture mobile (G16).

10. Dispositif de gril électrique portatif (E) selon l'une quelconque des revendications précédentes, **caractérisé en ce qu'**une partie de boîtier arrière (G3) de l'unité de gril électrique (G), opposée à l'utilisateur dans la direction longitudinale (X), est réalisée à double paroi au moyen d'une paroi arrière parallèle (G4) de l'unité de gril électrique (G), la partie de boîtier arrière (G3) et/ou la paroi arrière (G4) comportant de préférence au moins une ouverture d'entrée d'air, de préférence sous forme d'ouvertures de passage (G7a) d'une patte (G7c) d'une tôle d'isolation (G7), et au moins une ouverture de sortie d'air (G4a), qui sont conçues pour générer un flux d'air à travers la zone à double paroi de la partie de boîtier arrière (G3) et de la paroi arrière (G4) de l'unité de gril électrique (G).

11. Dispositif de gril électrique portatif (E) selon l'une quelconque des revendications précédentes, **caractérisé en** au moins une unité de tiroir (S), qui est disposée, de préférence directement, dans la direction verticale (Z) en dessous de l'unité de gril électrique (G).

12. Dispositif de gril électrique portatif (E) selon l'une quelconque des revendications précédentes, **caractérisé en** au moins une unité de table latérale mobile (T7), qui est disposée, de préférence latéralement dans la direction transversale (Y), à côté de l'unité de gril électrique (G) .

13. Dispositif de gril électrique portatif (E) selon l'une quelconque des revendications précédentes, **caractérisé en** au moins une unité de planche à découper (T8) enfichable, qui est disposée, de préférence latéralement dans la direction transversale (Y), à côté de l'unité de gril électrique (G).

14. Dispositif de gril électrique portatif (E) selon l'une quelconque des revendications précédentes, **caractérisé par** au moins une unité de table de cuisson (T10), qui est disposée, de préférence latéralement dans la direction transversale (Y), à côté de l'unité de gril électrique (G) .

15. Dispositif de gril électrique portatif (E) selon l'une quelconque des revendications précédentes, **caractérisé par** au moins une unité de surface de travail (T11), qui est disposée, de préférence latéralement dans la direction transversale (Y), à côté de l'unité de gril électrique (G).

16. Dispositif de gril électrique portatif (E) selon l'une des revendications précédentes, **caractérisé par** une unité de réglage (T), qui est portable et conçue pour recevoir au moins une unité de gril électrique (G), de préférence en outre pour recevoir au moins une unité de tiroir (S), au moins une unité de table latérale mobile (T7), au moins une unité de planche à découper enfichable (T8), au moins une unité de table de cuisson (T10) et/ou au moins une unité de surface de travail (T11).
